# EUROPEAN PATENT APPLICATION

(11) **EP 4 170 271 A1**
(43) Date of publication of application: **26.04.2023**
(21) Application number: 21203796.4
(22) Date of filing: 20.10.2021
(51) Int. Cl.: F28D 20/02

(54) **SYSTEMS AND METHOD FOR HEATING AND/OR COOLING AT LEAST ONE MEDIUM**

(71) Applicant: Energy Innovation Systems Limited, Hong Kong (HK)
(72) Inventor: Stauffer, Heinrich Paul, 7850522 Santiago (CL); Silva Bravo, Rodrigo Ignacio, 7690717 Santiago (CL); Stauffer, Juan Enrique, 7790146 Santiago (CL)
(74) Representative: Calysta NV

(57) **Abstract**

System for cooling and/or heating at least one medium, comprising: a first heat exchanger; a second heat exchanger; a force unit configured to compress the phase change material in the first heat exchanger by changing a first heat exchanger volume, and/or to compress the phase change material in the second heat exchanger by changing a second heat exchanger volume; a control unit configured to control at least the force unit, wherein the control unit is configured to: maintain the second heat exchanger volume constant during expansion of phase change material in the first heat exchanger; and maintain the first heat exchanger volume constant during the expansion of phase change material in the second heat exchanger.

## Description

The present invention relates to the field of heating and cooling, in particular HVAC, e.g. for domestic and industrial application. More particular, the invention relates to heating or cooling making use of phase changes, e.g. including a solid phase, of e.g. a phase change material.

It is known to use phase change material (PCM) for storing thermal energy. In such applications PCM can be used as a buffer for thermal energy or for electrical energy, e.g. during low-peak cost hours. The PCM in these is usually only subjected to thermal energy.

In recent years it has been proposed to manipulate PCM mechanically to enhance energy transfer. For example, WO2019126899A1 discloses a system having a cylinder with a piston, which is used to compress PCM present in two heat exchangers. The compression of the PCM causes a phase change, during which thermal energy can be transferred between the PCM and another medium. WO2021064202A1 by the same applicant proposes a similar system that has been improved in several ways.

The object of the present invention is to further improve the prior art, for example improving efficiency (usually measured by the coefficient of performance (COP)), and/or controllability, and/or by providing a practical implementation. It is a further object to overcome disadvantages of the prior art, or at least to provide an alternative for the prior art.

One or more of the objects of the invention are achieved with the systems and methods of the invention as elaborated herein. Three particular aspects of the invention are elaborated on below. The aspects can be combined with each other. Features explained with respect to one of the aspects can be used with the other aspects as well, for achieving similar advantages. Features explained with respect to systems can be implemented in the methods as well, mutatis mutandis. The methods can be performed using systems according to the invention and vice versa; however neither is limited thereto.

According to a first aspect, the invention relates to systems and methods for cooling and/or heating at least one medium. In embodiments, the system comprises:
- a first heat exchanger comprising a first outer end and a second outer end, wherein the second outer end is closed, wherein the first heat exchanger is configured to receive a phase change material,
- a force unit configured to be fluidly connected to the first outer end of the first heat exchanger and configured to compress the phase change material in the first heat exchanger,
- a PCM accumulator configured to receive phase change material,
- a valve system fluidly connected to the first heat exchanger and the PCM accumulator, and
- a control unit, wherein the control unit is configured to control the valve system to:
   i. during compression of the phase change material in the first heat exchanger by the force unit, fluidly disconnect the PCM accumulator from the first heat exchanger, and
   ii. during expansion of the phase change material in the first heat exchanger, fluidly connect the PCM accumulator with the first heat exchanger for allowing phase change material to expand into the PCM accumulator.

The system is thus configured to heat and/or cool at least one medium. The medium can e.g. be a gas or a liquid. The system can e.g. be applied in an HVAC system. The system can be configured to be applied in industrial or domestic applications. For example, the system can be configured to heat and/or cool a gas. The gas may e.g. be air, wherein said air is for air-conditioning a space. The space can e.g. be a room in a building or an interior in a vehicle. The system can also be configured to heat and/or cool a liquid. The liquid can e.g. be water that is used in industrial or domestic applications, e.g. for taking a shower, washing or cleaning people or objects. It is also possible that a liquid, e.g. a water, is heated or cooled for being used to heat or cool a space, e.g. by means of a radiator. It is also possible that a liquid, e.g. water, is heated or cooled, wherein said heated or cooled water is used for heating or cooling a gas, e.g. air to be used for air-conditioning a space.

The system comprises a first heat exchanger. The first heat exchanger has a first outer end and a second outer end, wherein the second outer end is closed. The first heat exchanger is configured to receive a phase change material (PCM). These materials have been found advantageous for transfer of thermal energy because they can maintain and transfer high enthalpy values per volume and weight.

The phase change material generally is a substance which releases or absorbs energy at phase transition, which can be used to provide heating or cooling. However, within the context of this invention, also phase changes within a single phase are considered, for example from one solid phase to another solid phase. Also partial phases are considered, for example partially solid states. Also materials for barocaloric heat absorption, e.g. plastic crystals and liquid crystal, are considered, in particular their transitions from solid state (true crystal) to liquid (true liquid). Intermediate states between solid and liquid are also considered, e.g. plastic crystals and liquid crystal. In general, the phase change material is preferably safe, non-toxic, has melting points at temperatures relevant for the application, and has 0 GWP. The phase change material may e.g. be water, bioPCM Q-15, Q-20. It is noted, however, that many phase change materials may be useful for the invention. Moreover, at the present time phase change materials are still the subject of much research and it is expected that in the future additional materials will be considered useful. The phase change material may at least partially be in a solid phase, a liquid phase, a supercritical phase, or a gaseous phase, and can change between phases during compression and expansion.

The first heat exchanger may e.g. be configured to be in contact - directly or indirectly - with a first secondary fluid for transferring thermal energy between the phase change material and the medium. The first heat exchanger can be formed in any of the known ways that are advantageous for transfer of thermal energy. The first heat exchanger can e.g. be configured for transfer of thermal energy between the phase change material arranged at a primary side and a first secondary fluid at a secondary side. At the primary side, the first heat exchanger may comprise the first and second outer end. At the primary side, the heat exchanger can e.g. comprise one or more branches, elbows, bends, etc., between the first outer end and the second outer end for improving transfer of thermal energy. The branches may e.g. be connected to each other by a manifold. At the secondary side, the first secondary fluid may e.g. flow from an inlet to an outlet, wherein the first secondary fluid is in contact with the branches between the inlet and outlet. The first secondary fluid may e.g. be the medium to be heated or cooled with the system or method, or the first secondary fluid may be configured to heat or cool the medium to be heated. For example, the first secondary fluid may be configured to be transported to a first secondary heat exchanger for heating of cooling the medium.

A force unit can be fluidly connected to the first outer end of the first heat exchanger and configured to compress the phase change material in the first heat exchanger. Since the second outer end of the first heat exchanger is closed, the phase change material cannot move out of the first heat exchanger. When the force unit exerts a force or pressure onto the phase change material or reduces the volume available for the phase change material, the phase change material will be compressed. For example, the force unit can be configured to change a first heat exchanger volume for compressing the phase change material. The first heat exchanger volume is a volume available for the phase change material in the first heat exchanger. This includes the volume of the first heat exchanger itself, but may also include the volume of a first PCM chamber of the force unit when the first heat exchanger is fluidly connected to the force unit. Optionally, a first heat exchanger connection between the first heat exchanger and the force unit is also comprised by the first heat exchanger volume, when present.

The force unit may e.g. be a pump. The force unit may e.g. be a cylinder having an intensifier piston which can be moved for compressing the phase change material. The force unit may be configured to cause a phase change of the phase change material during the compression. During the phase change, thermal energy can be transferred between the phase change material and the medium or first secondary fluid. Most phase change materials will expel or reject heat during compression and thus heat the medium or first secondary fluid; however some - such as water - may also cool the medium or first secondary fluid during compression by absorbing thermal energy.

In embodiments, the phase change may include an at least partial solid phase, e.g. be from solid to another solid or vice versa, or from liquid to solid or vice versa, or from supercritical to solid or vice versa. Phase changes including a solid phase may be advantageous because the phase change material occupies a relatively small volume in this phase.

In embodiments the phase change may e.g. be from supercritical to solid or vice versa, or from supercritical to liquid or vice versa, or from supercritical to gaseous or vice versa.

In embodiments, the phase change may be from gaseous to liquid or vice versa.

In embodiments, the system further comprises a PCM accumulator, which is configured to receive phase change material. In particular, the PCM accumulator is configured to receive phase change material from the first heat exchanger during expansion of the phase change material. When the PCM accumulator is fluidly connected to the first heat exchanger, the PCM accumulator is part of the first heat exchanger volume.

In embodiments, the system comprises a valve system fluidly connected to the first heat exchanger and the PCM accumulator. The valve system may comprise one or more valves. The valves may e.g. be (a combination of) two-way valves, three-way valves and four-way valves. The valves may be any type of suitable valve, e.g. ball valve, butterfly valve, gate valve, plug valve, globe valve. The valve system may comprise one or more actuators for moving the valves, e.g. electrical or pneumatic actuators. The valve system is configured to fluidly connect the first heat exchanger to the PCM accumulator and to fluidly disconnect the PCM accumulator from the first heat exchanger.

In embodiments, the system further comprises a control unit. The control unit may e.g. be configured to control the valve system. Optionally the control unit is also configured to control the force unit. The control unit may e.g. comprise a processing unit to process signals or measurements. The control unit may e.g. comprise a memory for storing information, such as data, measurements, and/or computer-readable instructions. The control unit may comprise one or more input terminals for receiving input signals and/or measurement signals. The control unit may comprise one or more output terminals for communicating output signals and/or control signals. The control unit may be configured to communicate, wired or wireless, with a user equipment device, such as a computer, tablet, smartphone. The control unit may be embodied in any suitable way, including a programmable logic controller (PLC), integrated circuit, or computer.

In particular, the control unit may be configured to - during compression of the phase change material in the first heat exchanger by the force unit - fluidly disconnect the PCM accumulator from the first heat exchanger. As such the first heat exchanger volume available for the phase change material is made smaller. This makes it easier for the force unit to compress the phase change material to achieve the phase change. It is also possible to increase the pressure, which may improve the transfer of thermal energy. Since the PCM accumulator and first heat exchanger are fluidly disconnected during compression, the valve system is preferably controlled accordingly before the force unit begins compressing the phase change material.

The control unit may further be configured to - during expansion of the phase change material in the first heat exchanger - fluidly connect the PCM accumulator with the first heat exchanger for allowing phase change material to expand into the PCM accumulator. Thus, during expansion of the phase change material, the first heat exchanger volume available for the phase change material is made larger. This allows the phase change material to further expand. During said expansion, thermal energy can be transferred between the phase change material and the first secondary fluid. The transfer of thermal energy is thus improved by fluidly connecting the PCM accumulator and the first heat exchanger. Optionally the PCM accumulator is fluidly connected to the first heat exchanger via the force unit, such that phase change material expands from the first heat exchanger via the force unit into the PCM accumulator.

By fluidly connecting or fluidly disconnecting the PCM accumulator and the first heat exchanger during expansion or compression, respectively, the first heat exchanger volume available for phase change material is increased or decreased, respectively. This improves the desired phase change and the transfer of thermal energy. The system is as such more efficient and may achieve a higher COP.

In the context of this document, two components being fluidly connected means that fluid can flow from the first component to the second component or vice versa, while fluidly disconnected means that the fluid cannot flow from the first component to the second component or vice versa. For example, when a two-way valve is arranged between the two components, the two-way valve can fluidly connect the components when being in an open position and fluidly disconnect the two components when being in a closed position. Other valves, e.g. three-way or four-way valves may comprise more positions, some of which fluidly connect two components and some of which fluidly disconnect two components. It is noted that although the terminology fluidly connected is used, the phase change material is not limited to fluids. The phase change material may e.g. partially or completely be in a solid phase.

In embodiments, the PCM accumulator has PCM accumulator chamber having an adjustable volume. For example, the PCM accumulator chamber may be configured to increase during expansion of the phase change material. The PCM accumulator may be configured to receive phase change material. The PCM accumulator chamber allows to adapt the volume available even more for the phase change material, which may improve the transfer of thermal energy, and also allows to control the pressure and thereby temperature at which the phase change material changes its phase.

In embodiments, the PCM accumulator comprises a moveable wall configured to be moved for increasing the adjustable volume of the PCM accumulator chamber. The moveable wall may e.g. be configured to be moved by pressure exerted by the phase change material. This allows the increase the volume available for the phase change material as the phase change material is expanding, thereby keeping the pressure relatively constant, e.g. within a range around a constant pressure. Consequently also the temperature of the phase change material during expansion is maintained relatively constant, which may improve transfer of thermal energy.

Optionally the moveable wall is subjected to a counterforce, wherein optionally the control unit is configured to control the counterforce. The counterforce biases the moveable wall in a direction opposite to the direction that the moveable wall is configured to be moved by the pressure exerted by the phase change material. The counterforce may e.g. be provided by means of a spring or a hydraulic pressure. For example, the PCM accumulator may comprise a pressurized fluid chamber configured to receive a pressurized fluid, wherein the pressurized fluid exerts the counterforce onto the moveable wall.

In embodiments, the system further comprises a PCM accumulator emptying module configured to release at least a part of the phase change material from the PCM accumulator. For example, the phase change material that the PCM accumulator received during expansion of the phase change material in the first heat exchanger, may be removed from the PCM accumulator by the PCM accumulator emptying module. For example, this may be done before another expansion of the phase change material, such that the PCM accumulator is able to receive the expanding phase change material. For example, the PCM accumulator emptying module may be configured to control the adjustable volume of the PCM accumulator chamber to be decreased, thereby forcing the phase change material out of the PCM accumulator. For example, the PCM accumulator emptying module may be configured to increase the counterforce. For example, the PCM accumulator emptying module may be configured to move the moveable wall. Optionally, the PCM accumulator emptying module may comprise a pump.

In embodiments, the control unit is configured to control the PCM accumulator emptying module. Optionally, the control unit is configured to control the PCM accumulator emptying module to release at least a part of the phase change material from the PCM accumulator into the first heat exchanger before compression of the phase change material in the first heat exchanger. This increases the amount of phase change material present in the first heat exchanger, and thus increases the pressure or reduces the amount of energy needed for the force unit to cause the phase change. Furthermore, the more phase change material is present, the more thermal energy can be released and/or absorbed.

In embodiments, the PCM accumulator is a cylinder with a piston, wherein the piston is configured to move for increasing and decreasing an adjustable volume of a PCM accumulator chamber. The PCM accumulator chamber may be fluidly connected to the valve system, and thus to the first heat exchanger when the control unit controls the valve system accordingly. By moving the piston, the first heat exchanger volume available for the phase change material can be changed. Preferably, the control unit is configured to control the piston. For example, the cylinder may be configured to be receive, e.g. in a pressurized fluid chamber, a pressurized fluid. The pressurized fluid may e.g. be provided with a hydraulic circuit, via a control valve. The pressurized fluid is configured to subject the piston to a counterforce. The control unit may be configured to control the control valve, thereby controlling the counterforce by controlling the amount of pressurized fluid that is supplied and/or the pressure of the pressurized fluid. During expansion of the phase change material the counterforce may be relatively small for allowing expansion and for allowing the piston to be moved to increase the PCM accumulator chamber. To empty the PCM accumulator chamber, the counterforce may be increased, e.g. by opening the control valve, for reducing the PCM accumulator chamber and forcing phase change material out of the PCM accumulator.

In embodiments, the system further comprises a second heat exchanger comprising a first outer end and a second outer end, wherein the second outer end is closed. The second heat exchanger is configured to receive phase change material. The force unit is configured to be fluidly connected to the first outer end of the second heat exchanger and is configured to compress the phase change material in the second heat exchanger. Said compression may cause a phase change of the phase changing material.

In this embodiment, the system thus comprises two heat exchangers in which phase material can be arranged. The force unit is configured to compress the phase change material in both heat exchangers. It is possible that the force unit comprises more than one intensifier, e.g. two pumps, two compressors, or two cylinders with moveable pistons, such that each heat exchangers is fluidly connected to at least one intensifier. It is also possible that a single intensifier is used for both heat exchangers, e.g. to compress the phase change material in both heat exchangers at the same time or alternately.

The second heat exchanger may be embodied in similar ways as explained with respect to the first heat exchanger. The second heat exchanger is also configured for heating and/or cooling a medium. In some embodiments, this may be the same medium at the same time as the first heat exchanger to improve the transfer of thermal energy. In other embodiments, the first heat exchanger is used for cooling while the second heat exchanger is used for heating, and/or vice versa. It may in particular be advantageous to e.g. first use the first heat exchanger for cooling the medium, i.e. transferring thermal energy from the medium to the phase change material. Then, the second heat exchanger can be used to cool the medium, while the thermal energy which is now stored in the (phase change material in the) first heat exchanger is transferred to a medium by heating said medium and cooling the phase change material. The cycle may then be repeated. The second heat exchanger may e.g. be configured to receive phase change material on primary side and receive a second secondary fluid on a secondary side, wherein the second heat exchanger is configured for transferring thermal energy between the phase change material and the second secondary fluid. In some embodiments, the second secondary fluid may the medium to be heated or cooled, and in some embodiments the second secondary fluid may be configured to heat or cool the medium, e.g. in a secondary heat exchanger.

In embodiments, the valve system is fluidly connected to the second heat exchanger. Optionally, the control unit is configured to control the valve system and the PCM accumulator emptying module to - before compression of the phase change material in the second heat exchanger - fluidly connect the PCM accumulator and the second heat exchanger and release phase change material from the PCM accumulator to the second heat exchanger. Optionally, at least a part of said phase change material has expanded from the first heat exchanger into the PCM accumulator. In this embodiment, the first and second heat exchanger are both connected to the PCM accumulator. Furthermore, a part of the phase change material that may be moved from the first heat exchanger to the second heat exchanger.

A first advantage of this embodiment is that the amount of phase change material can be increased in the heat exchanger that is to be compressed. By partly using phase change material that has previously expanded out of the other heat exchanger, the total amount of phase change material is reduced. A second advantage is that it efficiently allows to absorb and release energy. For example, during expansion the phase change material absorbs thermal energy, meaning that the phase change material in the PCM accumulator has absorbed the thermal energy. It is then moved to the other heat exchanger and compressed, such that the thermal energy can quickly be released again. Furthermore, during expansion the phase change material may become (partially) liquid. The liquid phase change material can then be moved to the other heat exchanger in which at least a part of the phase change material can still be in a solid phase. By providing the liquid phase change material, it may be easier to compress the phase change material. A further advantage is that a single PCM accumulator- and thus also a single PCM emptying module - can be used for multiple heat exchangers. This reduces the required components and thereby cost.

In embodiments, the control unit is configured to control the valve system to - during compression of the phase change material in the second heat exchanger by the force unit - fluidly disconnect the PCM accumulator from the second heat exchanger, and/or - during expansion of the phase change material in the second heat exchanger - fluidly connect the PCM accumulator with the second heat exchanger for allowing phase change material to expand into the PCM accumulator. This embodiment may be implemented with or without releasing phase change material expanded from the first heat exchanger to the second heat exchanger.

In embodiments wherein the system comprises the second heat exchanger, the system may further comprise a second PCM accumulator configured to receive phase change material expanding from the second heat exchanger. The second PCM accumulator may be configured to be fluidly connected to the second heat exchanger via the valve system or via a second valve system which the control unit is configured to control. The second PCM accumulator may be embodied according to any of the embodiments described herein for the PCM accumulator.

In embodiments, the system further comprises a first force unit valve arranged between the force unit and the first heat exchanger, wherein the control unit is configured to control the first force unit valve to fluidly disconnect the force unit from first heat exchanger during expansion of the phase change material in the first heat exchanger. In embodiments the system comprises a second force unit valve arranged between the force unit and the second heat exchanger, wherein the control unit is configured to control the second force unit valve fluidly disconnect the force unit from the second heat exchanger during expansion of the phase change material in the second heat exchanger. Thus, the force unit is fluidly disconnected from the first or second heat exchanger when the phase change material in the respective heat exchanger is expanding. Instead of entering the force unit, the expanding phase change material enters the PCM accumulator. This allows better control of the pressure and temperature, and may allow to use the force unit for the respective other heat exchanger (e.g. for compressing the phase change material) without affecting the expansion of the phase change material.

In embodiments, the first force unit valve is a three-way valve having at least a first position wherein thee first heat exchanger is fluidly connected to the force unit and a second position wherein the first heat exchanger is fluidly connected to the valve system. In embodiments, the second force unit valve is a three-way valve having at least a first position wherein the second heat exchanger is fluidly connected to the force unit and a second position wherein the second heat exchanger is fluidly connected to the valve system.

In embodiments, the system may comprise a first manifold fluidly connecting the first heat exchanger, the force unit (e.g. a first PCM chamber of the force unit), and the valve system. In embodiments, the system may comprise a second manifold fluidly connecting the second heat exchanger, the force unit (e.g. a second PCM chamber of the force unit), and the valve system.

In embodiments, the force unit may comprise a first PCM chamber having a first heat exchanger inlet and a first PCM accumulator inlet. In embodiments, the force unit may comprise a second PCM chamber having a second heat exchanger inlet and a second PCM accumulator inlet. In these embodiments, the phase change material is configured to expand from the first or second heat exchanger into the first or second PCM chamber, respectively. When the first or second PCM chamber is filled, the phase change material may further expand into the PCM accumulator. When the PCM accumulator may be configured to be emptied into the first and/or second PCM chamber, it may in particular be advantageous to empty the PCM accumulator to fill the first or second PCM chamber before compression, wherein the force unit is configured to compress the phase change material by reducing a volume of the first of second PCM chamber. The first PCM chamber may be part of the first heat exchanger volume and the second PCM chamber may be part of the second heat exchanger volume.

In embodiments, the system according to the first aspect is combined with the system according to the second aspect. For example, the system further comprises a second heat exchanger comprising a first outer end and a second outer end, wherein the second outer end is closed, wherein the second heat exchanger is configured to receive phase change material. The force unit is configured to change a first heat exchanger volume and/or a second heat exchanger volume for compressing the phase change material in the first heat exchanger and/or second heat exchanger, respectively. The control unit is configured to: maintain the second heat exchanger volume constant during expansion of phase change material in the first heat exchanger, and maintain the first heat exchanger volume constant during the expansion of phase change material in the second heat exchanger.

The first aspect further relates to a method for cooling and/or heating at least one medium, of which several embodiments are elaborated on below. The fact that several steps of the method are described in a certain order shall not be interpreted as meaning that the method is limited to this order of steps, unless a mutual order of two or more steps is explicitly mentioned. The method can be performed with a system according to one of the embodiments elaborated on above; however, neither is limited thereto. Features explained with reference to the system can be embodied in similar ways in the method. Features explained with reference to the system can be added to the method, mutatis mutandis, to achieve similar advantageous technical effects, even when such features are not explicitly mentioned herein with reference to the method. As the skilled person will understand the functionality and technical effects of the method from the explanation of the system, this is not completely repeated below.

In embodiments, the invention relates to a method for cooling and/or heating a medium, wherein the method comprises a step of using a system according to any of the embodiments explained herein.

In embodiments, the invention relates to a method for cooling and/or heating at least one medium using a system comprising a first heat exchanger, a PCM accumulator, and a valve system fluidly connected to the first heat exchanger and the PCM accumulator. Optionally, the system is a system according to any of the embodiments explained herein.

The method may comprise a step of fluidly disconnecting the PCM accumulator from the first heat exchanger by means of the valve system. The method further comprises a step of compressing a phase change material in the first heat exchanger, and keeping the PCM accumulator fluidly disconnected from the first heat exchanger during said compression. Thus, during the compression of the phase change material in the first heat exchanger, the PCM accumulator is not fluidly connected with the first heat exchanger. Optionally a phase change of the phase change material is caused during said compression.

The method may further comprise a step of fluidly connecting the PCM accumulator to the first heat exchanger by means of the valve system. The method further comprises a step of allowing expansion of the phase change material in the first heat exchanger, and keeping the PCM accumulator fluidly connected with the first heat exchanger during said expansion, thereby allowing phase change material to expand into the PCM accumulator. Optionally, these steps are done after the step of compressing the phase change material in the first heat exchanger, wherein optionally additional steps between the compression and expansion of the phase change material may include transferring thermal energy between the phase change material and the medium or a secondary fluid.

In embodiments, the expansion of the phase change material includes a step of causing a phase change of the phase change material, which may e.g. include a step of causing a transfer of thermal energy between the phase change material and the medium or a secondary fluid.

In embodiments, the method further comprises a step of increasing a PCM accumulator chamber having an adjustable volume during expansion of the phase change material. Optionally, the PCM accumulator chamber is increased by a force or pressure exerted by the phase change material on a moveable wall when the phase change material is expanding.

In embodiments, the method further comprises the step of releasing at least a part of the phase change material in the PCM accumulator into the first heat exchanger before the steps of fluidly disconnecting the PCM accumulator and compressing the phase change material in the first heat exchanger.

In embodiments, the system further comprises a second heat exchanger and the method further comprises the following step after the expansion of the phase change material in the first heat exchanger: releasing phase change material from the PCM accumulator to the second heat exchanger, wherein at least a part of said phase change material has expanded from the first heat exchanger into the PCM accumulator. Optionally, the method further comprises, e.g. thereafter, a step of fluidly disconnecting the PCM accumulator from the second heat exchanger, and compressing the phase change material in the second heat exchanger, and keeping the PCM accumulator fluidly disconnect from the second heat exchanger during said compression.

In embodiments, the method comprises the following steps: fluidly disconnecting the first heat exchanger from the force unit during expansion of the phase change material in the first heat exchanger; and/or fluidly disconnecting the second heat exchanger from the force unit during expansion of the phase change material in the second heat exchanger.

In embodiments, releasing the phase change material out of the PCM accumulator, e.g. into the first or second heat exchanger, may include reducing an PCM accumulator chamber, e.g. by moving a moveable wall.

In embodiments, the system further comprises a second heat exchanger, and the force unit is configured to be fluidly connected the second heat exchanger. The method comprises the following steps: during expansion of the phase change material in the first heat exchanger: maintaining a second heat exchanger volume constant. Optionally, the method further comprises a step of compressing the phase change material in the second heat exchanger with the force unit by changing the second heat exchanger volume, and during said compression keeping the first heat exchanger fluidly disconnected from the force unit. The method may further comprise a step of expanding the phase change material in the second heat exchanger, and during said expansion maintaining a first heat exchanger volume constant. In these embodiments the first aspect can thus be combined with the second aspect, which is elaborated on further below.

In embodiments, the system further comprises a control unit, wherein the control unit is configured to cause the system to perform one or more of the steps of the method.

In embodiments of the system or method, the phase change of the phase change material includes an at least partial solid phase, e.g. a phase change from solid to another solid or vice versa, or from liquid to solid or vice versa, or from supercritical to solid or vice versa.

One or more of the objects are achieved with a second aspect of the invention. The second aspect of the invention relates to systems and methods for cooling and/or heating at least one medium. The second aspect can be combined with the first aspect to synergistically increase the advantages. Feature that are mentioned with respect to the second aspect may be embodied in similar ways, mutatis mutandis, as like features that have been elaborated on with respect to the first aspect, unless explicitly mentioned otherwise. Features explained with reference to the first aspect can be added to the second aspect, mutatis mutandis, to achieve similar advantageous technical effects, even when such features are not explicitly mentioned herein with reference to the second aspect.

The second aspect relates to a system for cooling and/or heating at least one medium, comprising:
- a first heat exchanger comprising a first outer end and a second outer end, wherein the second outer end is closed, wherein the first heat exchanger is configured to receive phase change material
- a second heat exchanger comprising a first outer end and a second outer end, wherein the second outer end is closed, wherein the second heat exchanger is configured to receive phase change material,
- a force unit configured to be fluidly connected to the first outer end of the first heat exchanger and to the first outer end of the second heat exchanger, wherein the force unit is configured to compress the phase change material in the first heat exchanger by changing a first heat exchanger volume and/or to compress the phase change material in the second heat exchanger by changing a second heat exchanger volume,
- a control unit configured to control at least the force unit, wherein the control unit is configured to:
   - maintain the second heat exchanger volume constant during expansion of phase change material in the first heat exchanger, and
   - maintain the first heat exchanger volume constant during the expansion of phase change material in the second heat exchanger.

The second aspect thus relates to a system for cooling and/or heating a medium. The system comprises a first and a second heat exchanger and a force unit which can be fluidly connected to either of the first and second heat exchanger for compressing phase change material in the respective heat exchanger. The force unit is configured to change a first heat exchanger volume and/or a second heat exchanger volume. The first and second heat exchanger volume represent the volume available for the phase change material. For example, the first heat exchanger volume may include a volume of a primary side of the first heat exchanger, a first heat exchanger connection (when present), and a first PCM chamber of the force unit. The force unit may e.g. be configured to reduce the first PCM chamber for compressing the phase change material in the first heat exchanger. The compression of the phase change material may e.g. cause said phase change material to change phase, during which thermal energy can be transferred between the phase change material and the medium or a secondary fluid. Reference is made to the first aspect explained above for further explanation and possible embodiments of these features.

The control unit is configured to maintain the second heat exchanger volume constant during expansion of phase change material in the first heat exchanger, and maintain the first heat exchanger volume constant during the expansion of phase change material in the second heat exchanger. Advantageously, the expansion of the phase change material in one of the heat exchangers can be performed without affecting the phase change material in the respective other heat exchanger.

The inventors have found that this is an improvement over known systems having two heat exchangers connected to a single force unit, such as e.g. disclosed in WO2019126899A1 and WO2021064202A1. The prior art teaches that during expansion of one heat exchanger, the thermal fluid in the other heat exchanger should compress. Although such implementations may have some benefits, it inextricably makes the functioning of the heat exchangers dependent on each other.

With the inventive system according to the second aspect, the present inventors have found a way to partially decouple the functionality of the first and second heat exchanger. This allows to e.g. expand phase change material in the first heat exchanger without requiring the phase change material in the second heat exchanger to compress, such that the second heat exchanger can keep functioning undisturbed. It also allows to e.g. change the pressure in the first heat exchanger for expansion without affecting the pressure second heat exchanger. The pressure determines the temperature at which phase change occurs, and thus the transfer of thermal energy with the medium or secondary fluid.

In embodiments, the force unit comprises an intensifier piston, wherein the control unit is configured to move the intensifier piston for changing the first and second heat exchanger volume. By moving the intensifier piston, the phase change material can be moved and a PCM chamber which is part of the first and/or second heat exchanger volume be decreased. This increases the pressure and may cause a phase change. For example, the force unit may comprise a cylinder, wherein the intensifier piston is configured to increase and/or decrease a volume of at least one PCM chamber in the cylinder during the moving. For example, the force unit may be configured to receive a pressurized fluid, e.g. oil, wherein said pressurized fluid is configured to exert a pressure and/or force on the intensifier piston. The control unit may be configured to control the supply of pressurized fluid to the force unit. For this, the control unit may e.g. be configured to control a supply valve and/or a pump for the pressurized fluid. The force unit may e.g. comprise a first pressurized fluid chamber and a second pressurized fluid chamber for receiving the pressurized fluid. Increasing a pressure difference between the first and second pressurized fluid chamber may cause the intensifier piston to move.

In embodiments, the control unit is configured to maintain the intensifier piston in a fixed position during expansion of the phase change material in the first heat exchanger and during expansion of the phase change material in the second heat exchanger. By maintaining the intensifier piston in the fixed position, the first or second heat exchanger volume can be kept constant, since said first or second heat exchanger volume is at least partially defined by a position of the intensifier piston. In embodiments, the control unit may be configured to control the supply of pressurized fluid for maintaining the intensifier piston in the fixed position. For example, the control unit may be configured to keep the amount of pressurized fluid in a first and a second pressurized fluid chamber constant, for example by controlling at least one supply valve and/or at least one return valve. In embodiments, the control unit may be configured to control a brake for maintaining the intensifier piston in the fixed position, e.g. a mechanical brake or a servo-brake.

In embodiments, the force unit comprises a first PCM chamber fluidly connected to the first heat exchanger and a second PCM chamber fluidly connected to the second heat exchanger, wherein the intensifier piston is configured to reduce a volume of the first PCM chamber for compressing the phase change material in the first heat exchanger and to reduce a volume of the second PCM chamber for compressing phase change material in the second heat exchanger. For example, the piston may define within a force unit housing, which may e.g. be a cylinder, the first PCM chamber and the second PCM chamber, such that the volume of the second PCM chamber increases when the volume of the first PCM chamber decreases, and vice versa. The first PCM chamber may be part of the first heat exchanger volume and the second PCM chamber may be part of the second heat exchanger volume.

In embodiments, the system comprises a first force unit valve between the first heat exchanger and the force unit; and a second force unit valve between the second heat exchanger and the force unit. The control unit may be configured to control the first force unit valve to fluidly disconnect the first heat exchanger from the force unit for maintaining the first heat exchanger volume constant. The control unit may be configured to control the second force unit valve to fluidly disconnect the second heat exchanger from the force unit for maintaining the second heat exchanger volume constant.

For example, the first and/or second force unit valve may further be any suitable type of valve, e.g. ball valve, butterfly valve, gate valve, plug valve, globe valve. For example, the first force unit valve and/or the second force unit valve may be a two-way valve, having a closed position and an open position, wherein in the open position the first heat exchanger or second heat exchanger, respectively, is fluidly connected with the force unit, and in the closed position the first heat exchanger or second heat exchanger, respectively, is fluidly disconnected with the force unit. It is also possible that the first force unit valve and/or second force unit valve are three-way valves or four-way valves having a plurality of position, wherein at least in a first position the first heat exchanger or second heat exchanger, respectively, is fluidly connected with the force unit, and at least in a second position the first heat exchanger or second heat exchanger, respectively, is fluidly disconnected with the force unit. In case of three-way valve or four-way valve, the first and/or second force unit valve may e.g. also be fluidly connected to a valve system and/or a PCM accumulator as described with respect to the first aspect, although it also fluidly connect a PCM accumulator to the first and/or second heat exchanger when the first and/or second force unit valve is a two-way valve.

In embodiments, the force unit is configured to be activated by a pressurized fluid which is supplied via at least one supply valve, wherein the control unit is configured to control the at least one supply valve for maintaining the first heat exchanger volume and/or the second heat exchanger volume constant.

In embodiments, the system further comprises an intensifier piston lock configured to lock the intensifier piston in a fixed position, wherein the control unit is configured to control the intensifier piston lock for maintaining the first heat exchanger volume and/or the second heat exchanger volume constant.

In embodiments, the system further comprises a PCM accumulator and a valve system, wherein the control unit is configured control the valve system to fluidly connect the first heat exchanger to the PCM accumulator during expansion of the phase change material in the first heat exchanger and/or to fluidly connect the second heat exchanger to the PCM accumulator during expansion of the phase change material in the second heat exchanger. The PCM accumulator and the valve system may e.g. be according to any of the embodiments explained with reference to the first aspect. In this embodiment, the PCM accumulator allows for control of the volume, pressure, and/or temperature during expansion of the phase change material in the first heat exchanger, such that the second heat exchanger volume can be kept constant, or vice versa. When the PCM accumulator is fluidly connected to the first heat exchanger, the PCM accumulator is part of the first heat exchanger volume. When the PCM accumulator is fluidly connected to the first heat exchanger, the PCM accumulator is part of the first heat exchanger volume. It is noted that it is possible to provide a single PCM accumulator for both heat exchanger, but it is also possible to provide a first PCM accumulator for the first heat exchanger and a second PCM accumulator for the second heat exchanger.

In embodiments, the control unit is configured to control the first force unit valve to fluidly disconnect the first heat exchanger from the force unit when the phase change material in the first heat exchanger is expanding, and/or the control unit is configured to control the second force unit valve to fluidly disconnect the second heat exchanger from the force unit when the phase change material in the second heat exchanger is expanding. The first heat exchanger volume available for the phase change material during expansion in the first heat exchanger is thus determined by the PCM accumulator.

In embodiments, the force unit comprises a PCM chamber, wherein the intensifier piston is configured to reduce a volume of the PCM chamber for compressing the phase change material, wherein the PCM chamber is fluidly connected to the first force unit valve and to the second force unit valve. In this embodiment the first and second heat exchanger can be fluidly connected to the same PCM chamber, if the first or second force unit valve, respectively, is in a position for fluidly connecting the respective heat exchanger with the force unit.

The second aspect further relates to a method for cooling and/or heating at least one medium, of which several embodiments are elaborated on below. The fact that several steps of the method are described in a certain order shall not be interpreted as meaning that the method is limited to this order of steps, unless a mutual order of two or more steps is explicitly mentioned. The method can be performed with a system according to one of the embodiments elaborated on above; however, neither is limited thereto. Features explained with reference to the system can be embodied in similar ways in the method. Features explained with reference to the system can be added to the method, mutatis mutandis, to achieve similar advantageous technical effects, even when such features are not explicitly mentioned herein with reference to the method. As the skilled person will understand the functionality and technical effects of the method from the explanation of the system, this is not completely repeated below.

In embodiments, the invention relates to a method for cooling and/or heating a medium, wherein the method comprises a step of using a system according to any of the embodiments explained herein.

In embodiments, the invention relates to a method for cooling and/or heating at least one medium with a system comprising a first heat exchanger, a second heat exchanger, and a force unit configured to be fluidly connected to the first heat exchanger and the second heat exchanger. Optionally, the system is a system according to any of the embodiments described herein.

In embodiments, the method comprises the following steps: compressing the phase change material in the first heat exchanger with the force unit by changing a first heat exchanger volume, thereby e.g. causing a phase change of the phase change material; and expanding the phase change material in the first heat exchanger, and during said expansion maintaining a second heat exchanger volume constant.

In embodiments, the method comprises the following steps: compressing the phase change material in the second heat exchanger with the force unit by changing the second heat exchanger volume, thereby e.g. causing a phase change of the phase change material; and expanding the phase change material in the second heat exchanger, and during said expansion maintaining the first heat exchanger volume constant.

In embodiments, the step(s) of compressing the phase change material, e.g. in the first and/or second heat exchanger, include moving an intensifier piston. For example, the moving of the intensifier piston may cause a volume of a (first or second) PCM chamber to reduce, wherein said PCM chamber is fluidly connected to the first or second heat exchanger during compression of the phase change material is the respective heat exchanger. For example, the PCM chamber may be configured to be fluidly connected to either of the first and second heat exchanger; or a first PCM chamber may be configured to be fluidly connected to the first heat exchanger and a second PCM chamber may be configured to be fluidly connected to the second heat exchanger. When a (first or second) PCM chamber is fluidly connected to the first or second heat exchanger, said (first or second) PCM chamber may be part of the first or second heat exchanger volume, respectively. The steps of keeping the first or second heat exchanger volume constant may e.g. include keeping the first or second PCM chamber constant, respectively.

In embodiments, the steps of keeping the first or second heat exchanger volume constant may e.g. include keeping the intensifier piston in a fixed position.

In embodiments, maintaining the first heat exchanger volume and/or the second heat exchanger volume constant includes maintaining the intensifier piston in a fixed position using an intensifier piston lock.

In embodiments, the method further includes fluidly disconnecting the first heat exchanger from the force unit for maintaining the first heat exchanger volume constant and/or fluidly disconnecting the second heat exchanger from the force unit for maintaining the second heat exchanger volume constant.

In embodiments, the steps of compressing the phase change material include providing a pressurized fluid to the force unit, wherein a pressurized fluid is used for keeping the intensifier piston in a fixed position when maintaining the first and/or second heat exchanger volume constant. For example, controlling the pressure of the pressurized fluid may include controlling one or more of a control valve, supply valve, return valve or pump for the pressurized fluid. The pressurized fluid may e.g. be an oil. The pressurized fluid may e.g. be used to compress the phase change material, for example the pressurized fluid may exert a force and/or pressure on the intensifier piston, wherein the intensifier piston is moved by the pressurized fluid for compressing the phase change material, for example by reducing a (first or second) PCM chamber.

In embodiments, the system further comprises a PCM accumulator. The method further comprises a step of fluidly connecting the PCM accumulator with the first heat exchanger during expansion of the phase change material in the first heat exchanger, and/or a step of fluidly connecting the PCM accumulator with the second heat exchanger during expansion of the phase change material in the second heat exchanger. The PCM accumulator may e.g. be according to any of the embodiments described with respect the first aspect. The method may comprise any of the steps comprised by the method described with respect to the first aspect.

In embodiments, the system further comprises a control unit, wherein the control unit is configured to cause the system to perform one or more of the steps of the method.

In embodiments of the system or method according to the second aspect, the phase change of the phase change material includes an at least partial solid phase, e.g. a phase change from solid to another solid or vice versa, or from liquid to solid or vice versa, or from supercritical to solid or vice versa.

One or more of the objects of the invention is achieved with the third aspect. The third aspect pertains to the way a system for heating and/or cooling at least one medium can be used. In particular, the third aspect relates to methods, systems, control units, and computer-readable instructions. The methods as described with respect to the third aspect can also be applied with the systems and the methods described with respect to the first and second aspect. The systems, control units, and computer readable instructions described with respect to the third aspect can correspond to the systems or be used when performing the methods as described with respect to the first and/or second aspect.

The third aspect can thus be combined with the first and/or second aspect synergistically increase the advantages. Feature that are mentioned with respect to the third aspect may be embodied in similar ways, mutatis mutandis, as like features that have been elaborated on with respect to the first and/or second aspect, unless explicitly mentioned otherwise. Features explained with reference to the first and/or second aspect can be added to the third aspect, mutatis mutandis, to achieve similar advantageous technical effects, even when such features are not explicitly mentioned herein with reference to the third aspect.

In embodiments, the third aspect relaters to a method for heating and/or cooling at least one medium, using a system. The system may e.g. comprise a first heat exchanger. The first heat exchanger can e.g. be configured for transfer of thermal energy between phase change material arranged at a primary side of the first heat exchanger and a first secondary fluid at a secondary side of the first heat exchanger. The system may further e.g. comprise a second heat exchanger which may e.g. be configured for transfer of thermal energy between phase material arranged at a primary side of the second heat exchanger and a first secondary fluid at a secondary side of the second heat exchanger. The system may further e.g. comprise a force unit configured to compress the phase change material in the first heat exchanger by changing a first heat exchanger volume and to compress the phase change material in the second heat exchanger by changing a second heat exchanger volume.

In embodiments, the method may comprise a starting step. In the starting step, it may e.g. be defined that one of the first and second heat exchanger is used in a cold mode and the other of the first and second heat exchanger is used in a warm mode. One of the heat exchangers may thus be used for heating the respective secondary fluid, and the other heat exchanger for cooling the respective secondary fluid. One of secondary fluids can subsequently be used for - directly or indirectly - heating or cooling a space, while the other secondary fluid can be used to provide or remove, respectively, thermal energy from the other heat exchanger. The secondary fluids can be gaseous or liquids. For example, the secondary fluids may be air, wherein the heated or cooled air is supplied to a space to be heated or cooled. For example, the secondary fluid may be a thermal fluid such as water, configured to flow through a radiator in a space to be heated or cooled. For example, the secondary fluid may be an intermediate thermal fluid, such as water, configured to be transferred to secondary heat exchangers for heating or cooling air that is configured to be supplied to a space to heated or cooled. For example, the heat exchanger to be used in the cold mode may on its secondary side be fluidly connected to a heat absorption unit, and the heat exchanger to be used in the warm mode may on its secondary side be fluidly connected with a heat removal unit. Fluidly connected on the secondary side may include that the respective secondary fluid is configured to flow towards the heat absorption unit or heat removal unit, respectively. The starting step may further include controlling one or more valves for fluidly connecting the secondary sides of the first and second heat exchanger with the heat absorption unit or heat removal unit, respectively. The starting step may further include starting one or more pumps and/or compressors.

The starting step may e.g. be initiated when a starting signal is received. The starting signal may e.g. be generated when a temperature of a room to be heated or cooled deviates from a desired temperature by more than a starting range. A temperature sensor may e.g. be present in the room for measuring the temperature, and the desired temperature may e.g. be inputted by a user, e.g. using a thermostat. The starting signal may e.g. be generated when a used manually turns on the heating or cooling.

In embodiments, the method may comprise a first heat exchanger compression step, which includes compressing phase change material in the first heat exchanger. This may cause the phase change material to change phase. During the phase change transfer of thermal energy is caused between the phase change material in the first heat exchanger and the first secondary fluid. Depending on the phase change material that is used, the compression will cause the phase change material to reject or absorb thermal energy. Whether the first heat exchanger is the heat exchanger being used in cold or warm mode thus also depends on the phase change material that is used. The compressing may e.g. include using the force unit, e.g. in ways explained herein, e.g. with reference to the first or second aspect.

In embodiments, the method may optionally comprise a first heat exchanger compressed step. The first heat exchanger compressed step may e.g. include causing transfer of thermal energy between the phase change material in the second heat exchanger and the second secondary fluid, while keeping the phase change material in the first heat exchanger compressed. For example, the first heat exchanger compressed may include keeping an intensifier piston in a fixed position. For example, keeping phase change material in the first heat exchanger compressed may include maintaining the first heat exchanger volume constant. Optionally, the first heat exchanger compressed step includes causing the phase change material in the second heat exchanger to expand, e.g. into a PCM accumulator. Optionally, the first heat exchanger compressed step also includes causing transfer of thermal energy between the phase change material in the first heat exchanger and the first secondary fluid.

Generally, during the first heat exchanger compressed step little energy is provided into the system, while transfer of thermal energy can still be achieved. This advantageously improved the efficiency and thus the COP.

Optionally, both the first and second heat exchanger volume are maintained constant for at least a part of the first heat exchanger compressed step. During the first heat exchanger compressed step thermal energy is transferred between the phase change material on the one hand and the second secondary fluids and optionally the first secondary fluid on the other hand. The phase change material is not actively manipulated by the force unit. The inventors have found that constant manipulation of the phase change material is not required for efficient energy transfer. As the phase change material in the first heat exchanger is compressed in the first heat exchanger compression step, it is at a relatively large temperature difference with the first secondary fluid, and transfer of thermal energy can be maintained for a while. Generally, the phase change material in the second heat exchanger can also still be used for transferring thermal energy with the second secondary fluid without requiring additional compression or expansion. As such, the amount of mechanical energy required for heating or cooling is reduced, making the system more efficient and increasing the COP.

In embodiments, the method may comprise a first heat exchanger decompression step, wherein the phase change material in the first heat exchanger is decompressed. For example, the phase change material in the first heat exchanger can expand. For example, the phase change material in the first heat exchanger can change phase. During the decompression and/or expansion, the phase change material will absorb or reject thermal energy. This may depend on which phase change material is present in the first heat exchanger, but will be opposite of the thermal energy transfer during the first heat exchanger compression step. The first heat exchanger decompression step may include increasing the first heat exchanger volume available for the phase change material in the first heat exchanger. This can e.g. be done by fluidly connecting a PCM accumulator or by moving an intensifier piston to increase a first PCM chamber.

The method as explained above may thus comprise a starting step, a first heat exchanger compression step, and a first heat exchanger decompression step. These steps are preferably performed in this order, although intermediate steps may be performed between these steps. The combination of these steps allows to warm and cool the first secondary fluid. In advantageous optional embodiments, the method further comprises a first heat exchanger compressed step, preferably performed after the first heat exchanger compressions step and before the first heat exchanger decompression step. As explained above, the first heat exchanger compressed step allows to increase the efficiency.

When the system comprises also the second heat exchanger, it may be preferred to also use the second heat exchanger for heating and cooling the second secondary fluid. Therefore, in optional embodiments, the method may comprise a first heat exchanger reversal step, wherein it is defined that the heat exchanger that was previously used in cold mode will now be used in warm mode, and the heat exchanger that was previously used in warm mode will now be used in cold mode. For example, if during the starting step the first heat exchanger was defined to be used in the cold mode and the second heat exchanger in the warm mode, the first heat exchanger will now be used in the warm mode and the second heat exchanger in the cold mode, or vice versa. For example, the heat exchanger that was previously fluidly connected on its secondary side with a heat removal unit may now be fluidly connected with a heat absorption unit, and vice versa. The first heat exchanger reversal step may therefore include controlling one or more valves, pumps, or compressors for changing the fluid connection on the secondary side of the first and second heat exchangers.

After the first heat exchanger reversal step, the method may further comprise a second heat exchanger compression step, optionally a second heat exchanger compressed step, a second heat exchanger decompression step, and optionally a second heat exchanger reversal step. These steps may be embodied similar as the respective corresponding steps explained above with respect to the first heat exchanger, mutatis mutandis. For example, in a general version these steps can be described as follows, optionally in the order as listed:
- a second heat exchanger compression step, which includes compressing phase change material in the second heat exchanger, during which transfer of thermal energy is caused between the phase change material in the second heat exchanger and the second secondary fluid;
- optionally, a second heat exchanger compressed step, which includes causing transfer of thermal energy between the phase change material in the first heat exchanger and the first secondary fluid, while keeping the phase change material in the second heat exchanger compressed;
- a second heat exchanger decompression step, wherein the phase change material in the first heat exchanger is decompressed;
- optionally, a second heat exchanger reversal step, wherein it is defined that the heat exchanger that was previously used in cold mode will now be used in warm mode, and the heat exchanger that was previously used in warm mode will now be used in cold mode.

By using the first heat exchanger in the cold mode while the second heat exchanger is in the warm mode, and vice versa, it may be achieved that a space is almost continuously being cooled or heated. For example, if the space is to be cooled, the first heat exchanger can first be used in the cold mode. The phase change material in the first heat exchanger can absorb thermal energy until the energy transfer between the first secondary fluid and the phase change material is no longer satisfactory, e.g. because the temperature difference is too low. Then, it can be defined that the second heat exchanger will be used in the cold mode to cool the space. Simultaneously, the thermal energy in the phase change material is the first heat exchanger can be removed, e.g. to outside, until the next heat exchanger reversal step.

The method according to the third aspect advantageously allows to perform the compression of the first heat exchanger, the decompression of the second heat exchanger, the decompression of the first heat exchanger, and the compression of the second heat exchanger each in different steps. Unlike conventional systems, the compression and decompression of the first heat exchanger is thus not determined by the decompression and compression of the second heat exchanger. Instead, they are decoupled. This is in particular a difference with conventional systems when the force unit is a cylinder with an intensifier piston for compressing the phase change material in the first and second heat exchanger. Decoupling the respective compressions and decompressions advantageously allows to improve the controllability and efficiency of the system.

In embodiments, the first heat exchanger decompression step is performed before the second heat exchanger compression step and optionally before the first heat exchanger reversal step. Decompressing the first heat exchanger before compressing allows to improve the efficiency, as will also be clarified by some examples applying this principle illustrated herein.

In embodiments, the method further comprises a first PCM connection step. The first PCM connection step is performed after the first heat exchanger compressed step and before the second heat exchanger compression step and preferably before the first heat exchanger reversal step. Optionally the first PCM connection step is part of the first heat exchanger decompression step. Optionally the method may also comprise a second PCM connection step, which may be performed after the second heat exchanger compressed step, and before a further first heat exchanger compression step when present, and preferably before the second heat exchanger reversal step when present. Optionally the second PCM connection step is part of the second heat exchanger decompression step.

The first PCM connection step and the second PCM connection step, when present, may comprise: fluidly connecting the primary side of the first heat exchanger to the primary side of the second heat exchanger, and mixing the phase change material in the first heat exchanger with the phase change material in the second heat exchanger. Thus, in the first and second PCM connection step the compressed phase change material from one of the heat exchangers is mixed with phase change material of the other heat exchanger. During this process the compressed phase change material can become decompressed. This step advantageously allows to let the pressures of the phase change material in both heat exchangers converge towards each other. For example, the first PCM connection step will cause the pressure of the phase change material in the first heat exchanger to decrease and in the second heat exchanger to increase. This reduces the amount of energy required in the second heat exchanger compression step to compress the phase change material in the second heat exchanger. Since less energy is required, the efficiency of the system is improved.

In embodiments, the during the first heat exchanger compressed step the phase change material in the second heat exchanger expands while the first heat exchanger volume is kept constant, and/or during the second heat exchanger compressed step the phase change material in the first heat exchanger expands while the second heat exchanger volume is kept constant. Thus, in this embodiment the third aspect is combined with the second aspect. Reference is made to the explanation of the second aspect for further possible embodiments and associated advantages.

In embodiments, after the second heat exchanger reversal step the method is restarted from the first heat exchanger compression step, wherein optionally this is repeated until a predetermined temperature is reached in a space to be cooled or heated, or until a stop signal is received. The method can thus be repeated as long as desired, except for the starting step since the method has already been started. There may e.g. be a temperature sensor in the room to be cooled or heated, and a desired temperature may be provided to the system, e.g. controllable via a thermostat. When the temperature as measured by the temperature sensor is within a stopping range of the desired temperature, the method may be stopped. It is also possible that a user stops the method, e.g. by manually stopping the heating or cooling of the space.

In embodiments, the method further comprises - after the first heat exchanger compressed step (when present) and before the first heat exchanger reversal step, and optionally as part of the first heat exchanger decompression step -: a first secondary fluid balancing step, wherein the first secondary fluid and the second secondary fluid are fluidly connected to each other and mixed. In embodiments, the method further comprises - after the second heat exchanger compressed step (when present) and before the second heat exchanger reversal step, and optionally as part of the second heat exchanger decompression step - a second secondary fluid balancing step, wherein the first secondary fluid and the second secondary fluid are fluidly connected to each other and mixed. Optionally the first and/or second secondary fluid balancing step includes controlling one or more valves to fluidly connect the secondary side of the first heat exchanger and the secondary side of the second heat exchanger.

After the transfer of thermal energy between the phase change material in the first and second heat exchanger and the first and second secondary fluids, respectively, one of the first and secondary fluid will be relatively cold and the other will be relatively warm. Which one is warm and which one is cold depends on which heat exchanger was used in the warm mode and which heat exchanger in the cold mode. By mixing the first and second secondary fluid, thermal energy transfer between both will occur. The inventors have found this to be a beneficial step, since after the first or second heat exchanger reversal steps the first and second heat exchanger will be used in the opposite mode (cold vs warm). The cold secondary fluid will thus have to be heated and the warm secondary fluid will have to be cooled. Due to the mixing, this is already partly achieved. The secondary fluids are at temperatures that improve the transfer of thermal energy with the phase change material and thus the efficiency.

Optionally, the first secondary fluid balancing step is part of the first heat exchanger decompression step. Thus, the phase change material in the first heat exchanger is caused to expand due to temperature of the first secondary fluid changing during the mixing with the second secondary fluid. It has been found that this improves the efficiency. The expansion of the phase change material improves the transfer of thermal energy. This allows the temperatures of the phase change material in both heat exchangers to converge faster towards an intermediate temperature. As a result the subsequent steps wherein the heat exchangers are used in reversed modes are more efficient. Furthermore, the subsequent steps can be started faster, which may be beneficial because during the first secondary fluid balancing step the space to heated or cooled is not being actively heated or cooled. Similarly, optionally the second secondary fluid balancing step is part of the second heat exchanger decompression step. The system may e.g. comprise at least one PCM accumulator for the phase change material to expand into.

In embodiments, during the first and/or second secondary fluid balancing step, the mixed first and second secondary fluid are circulated through the secondary sides of the first and second heat exchangers. This allows transfer of thermal energy between the mixed first and second secondary fluid on the one hand, and the phase change material in the first and second heat exchanger on the other hand. Furthermore, this allows indirect transfer (via the mixed first and second secondary fluid) of thermal energy between the phase change material in the first heat exchanger and the phase change material in the second heat exchanger. The cold phase change material is heated, and the warm phase change material is cooled, before they are used in the reversed mode. It has been found that this further improves the efficiency. Optionally the first and second heat exchanger are arranged in parallel. Optionally the system comprises a mixing pump for circulating the first and second secondary fluid.

In embodiments, the first and/or second secondary fluid balancing step is completed after a threshold time. The threshold time may e.g. be between 5-30 seconds, e.g. between 10-20 seconds, e.g. 15 seconds. It may be advantageous that the first and/or second secondary fluid balancing steps do not last too long, because during these steps the space to be heated or cooled may not be actively heated or cooled.

In embodiments, the first and/or second secondary fluid balancing step is completed when an outlet temperature of the first heat exchanger becomes smaller or larger than or equal to an inlet temperature of the first heat exchanger, and/or an outlet temperature of the second heat exchanger becomes smaller or larger than or equal to an inlet temperature of the second heat exchanger. With "becomes smaller or larger than or equal to" it is meant that the respective outlet temperature crosses the respective inlet temperature, e.g. was first smaller but became larger or equal; or was first larger but became smaller or equal. Whether the respective temperature is first larger or smaller depends on whether the respective heat exchanger was used in the warm mode or the cold mode. The inlet and outlet temperatures are measured at the secondary sides of the respective heat exchangers, e.g. as temperatures of the respective secondary fluid. In embodiments, this criterium is used in combination with the threshold time explained above, i.e. the first and/or second secondary fluid balancing step is stopped when one of both criteria is met.

In embodiments, the first and/or second secondary fluid balancing step is completed when at least one of the following becomes smaller or larger than or equal to an average temperature: an inlet temperature of the first heat exchanger; an outlet temperature of the first heat exchanger; an inlet temperature of the second heat exchanger; or an outlet temperature of the second heat exchanger. The average temperature is an average of the inlet temperature of the first heat exchanger, the outlet temperature of the first heat exchanger, the inlet temperature of the second heat exchanger, and the outlet temperature of the second heat exchanger. It has been found that using this criterium for stopping the first and/or second secondary fluid balancing step advantageously stops the step when the transfer of thermal energy from the first heat exchanger to the second heat exchanger becomes less efficient, without taking too long. In embodiments, this criterium is used in combination with the threshold time explained above, i.e. the first and/or second secondary fluid balancing step is stopped when one of both criteria is met.

In embodiments, during the starting step, the first heat exchanger reversal step, and/or the second heat exchanger reversal step, the secondary side of the heat exchanger that is used in the cold mode is fluidly connected to a heat absorption unit, and the secondary side of the heat exchanger that is used in the warm mode is fluidly connected to a heat removal unit. For example, the heat absorption unit may be configured for the secondary fluid to absorb thermal energy from e.g. air, wherein said air is thus cooled and can subsequently be used for cooling a space, or the absorbed thermal energy can be used for heating a space. The heat absorption unit may e.g. be a fan-coil or a plate heat exchanger. For example, the heat removal unit may be configured for expelling thermal energy from the secondary fluid, e.g. to air, which may be used for heating space or for removing heat that was previously absorbed for cooling a space. The heat removal unit may e.g. be a dry-cooler, a plate heat exchanger, or a cooling tower. It is also possible that the secondary side of the respective heat exchanger is part of the heat absorption unit or the heat removal unit. For example, the secondary side of the heat exchanger used in the cold mode may be configured to absorb thermal energy from air, wherein said air is the secondary fluid. Said air is provided to a space for cooling said space or is guided away, e.g. to outside of the space or building. Similarly, the secondary side of the heat exchanger used in the warm mode may be configured to provide thermal energy to air, wherein said air is the secondary fluid. Said air is provided to a space for heating said space or is guided away, e.g. to outside of the space or building.

In embodiments, the first secondary fluid is circulated between the secondary side of the first heat exchanger and one of the heat absorption unit or the heat removal unit, and the second secondary fluid is circulated between the secondary side of the second heat exchanger and the other of the heat absorption unit or the heat removal unit. By providing this circulation thermal energy can keep being transferred between the respective heat exchanger and the heat absorption unit or the heat removal unit for as long as desired. This may e.g. be until the cooling or heating is no longer efficient, or a temperature difference is below a threshold difference. The system may e.g. comprise a first secondary fluid pump for circulating the first secondary fluid and a second secondary fluid pump for circulating the second secondary fluid.

In embodiments, in the first heat exchanger compression step and/or the second heat exchanger compression step the compressing of the phase change material includes supplying a pressurized fluid to the force unit. The compressing of the phase change material may further e.g. include moving an intensifier piston by means of the pressurized fluid, and e.g. reducing a (first or second) PCM volume. The pressurized fluid may e.g. be an oil, which may e.g. be pressurized using a pump. The method may thus include controlling a pump and/or one or more supply valves for supplying the pressurized fluid.

In embodiments, the method further comprising controlling the pressure in the first and/or second heat exchanger, e.g. by controlling the pressure of the pressurized fluid. Optionally, the pressure of the pressurized fluid is controlled according to a setpoint. The setpoint may e.g. be determined based on a desired pressure or temperature of the phase change material in the respective heat exchanger. For example, the pressure in the first or second heat exchanger during compression may controlled by controlling the first or second heat exchanger volume available for the phase change material in the respective heat exchanger. Said first or second heat exchanger volume may e.g. be controlled by controlling a volume of a respective PCM chamber, e.g. by controlling a position of the intensifier piston. For example, the pressure in the first or second heat exchanger during compression may controlled by controlling the pressure exerted by the force unit on the phase change material in the respective heat exchanger. Said pressure may e.g. be controlled by controlling a force or pressure exerted to the intensifier piston. The position of the intensifier piston and/or the force exerted onto the phase change material by the intensifier piston, can be controlled by controlling the pressure of the pressurized fluid.

Controlling the pressure in the heat exchanger may in particular be advantageous, because the temperature at which the phase change material changes phase is dependent on the pressure. By controlling the pressure, the temperature can thus also be controlled. The transfer of thermal energy with the respective secondary fluid is dependent on the temperature of the phase change material, and can thus also be controlled this way.

In embodiments, the first heat exchanger compressed step includes: stop providing pressurized fluid to the force unit, optionally by stopping a pump. In embodiments, the second heat exchanger compressed step includes: stop providing pressurized fluid to the force unit, optionally by stopping a pump. Optionally, first at least one supply valve and/or return valve for the pressurized fluid is closed. Since the first and second heat exchanger volume are kept constant, it is not necessary to provide pressurized fluid for e.g. moving the intensifier piston. By stopping to provide the pressurized fluid, no energy is wasted and thus the efficiency is improved.

In embodiments, wherein the first and/or second heat exchanger compression step is completed when the pressurized fluid reached a threshold pressure. The pressure of the pressurized fluid determines the pressure of the phase change material, and as such the temperature.

In embodiments, the first and/or second heat exchanger compression step is completed when the phase change material in the first and/or second heat exchanger reached a PCM pressure. For example, the PCM pressure may be 80 MPa. The system may comprise a first pressure sensor at the first heat exchanger and a second pressure sensor at the second heat exchanger for measuring the pressure of the phase change material.

In embodiments, the first and/or second heat exchanger compressed step is completed after a threshold time. The threshold time may e.g. be between 5-30 seconds, e.g. between 10-20 seconds, e.g. 15 seconds. The time may e.g. be measured after fixing the intensifier piston in a fixed position, or after stopping a pump for pressurized fluid that is used for compressing the phase change material.

In embodiments, the first and/or second heat exchanger compressed step is completed when a difference between an inlet temperature and outlet temperature is below threshold difference. This may indicate that the transfer of thermal energy between the phase change material and the secondary fluid is no longer efficient. Optionally the heat first and/or second heat exchanger compressed step is only competed when said difference is below the threshold difference for a predetermined period, e.g. 3 seconds. For example, the threshold difference may be below 7K (degrees Kelvin), e.g. below 5K, e.g. below 3K. Optionally, during the first heat exchanger compressed step: the inlet temperature is the temperature of the second secondary fluid when entering the second heat exchanger; and the outlet temperature is the temperature of the second secondary fluid when leaving the second heat exchanger. During the second heat exchanger compressed step: the inlet temperature may be the temperature of the first secondary fluid when entering the first heat exchanger; and the outlet temperature may be the temperature of the first secondary fluid when leaving the first heat exchanger. The system may comprise one or more temperature sensors for measuring the respective temperatures. In embodiments this criterium of the threshold difference is used in combination with the threshold time explained above, e.g. the first and/or second heat exchanger compressed step is completed when at least one of both criteria is met.

In embodiments, the system further comprises a PCM accumulator. The PCM accumulator may be in accordance with any of the embodiments explained with respect to the first aspect, and any of the features explained respect to the first aspect may be added to the third aspect. For example, the method may comprise a step of, before the first heat exchanger compression step: forcing at least a part of the phase change material from the PCM accumulator into the first heat exchanger. Optionally, also the starting step includes forcing at least a part of the phase change material in the PCM accumulator into the first heat exchanger. By increasing the amount of phase change material in the first heat exchanger, the pressure can be increased, and more efficient transfer of thermal energy can be achieved.

Optionally, the first heat exchanger compression step includes: before compressing the phase change material, fluidly disconnecting the PCM accumulator from the first heat exchanger. By fluidly disconnecting the PCM accumulator before compressions, it is ensured that none of the pressurized phase change material is forced into the PCM accumulator. In addition, the first heat exchanger volume available for the phase change material during compression is decreased, thereby increasing pressure, and improving efficiency.

Optionally, the first heat exchanger compressed step includes, optionally during a part of said step: keeping the first and second heat exchanger both fluidly disconnected from the PCM accumulator. This ensures that the first and second heat exchanger volume are kept maintained constant.

Optionally, the first heat exchanger decompression step includes: letting the phase change material in the first heat exchanger expand, wherein the method further includes, before the expansion, fluidly connecting the first heat exchanger to the PCM accumulator, wherein optionally during expansion a volume of the PCM accumulator is increased. This increases the volume available for the phase change material and improves efficiency.

Optionally, the method comprises a step of, after the first heat exchanger decompression step and optionally before the second heat exchanger compression step: releasing at least a part of the phase change material in the PCM accumulator into the second heat exchanger, including phase change material that has expanded out of the first heat exchanger during the first heat exchanger decompression step. This further improves efficiency, as explained with reference to the first aspect.

The method may include similar steps for the compression of the phase change material in the second heat exchanger. Optionally, during the second heat exchanger compression step: before compressing the phase change material, fluidly disconnecting the PCM accumulator from the second heat exchanger. Optionally, during at least a part of the second heat exchanger compressed step: keeping the first and second heat exchanger both fluidly disconnected from the PCM accumulator. Optionally, during the second heat exchanger decompression step: letting the phase change material in the second heat exchanger expand, and before the expansion, fluidly connecting the second heat exchanger to the PCM accumulator, wherein optionally during expansion a volume of the PCM accumulator is increased. Optionally, after the second heat exchanger decompression step and optionally (when present) before the first heat exchanger compression step: releasing at least a part of the phase change material in the PCM accumulator into the first heat exchanger, including phase change material that has expanded out of second first heat exchanger during the second heat exchanger decompression step.

The third aspect further relates to a system for cooling and/or heating a liquid, configured to perform a method according to any of the embodiments described above, wherein optionally the system comprises a control unit configured for performing said method. The control unit may be configured to control the components of the system to perform the steps. For example, the control unit may control any of the described valves (e.g. via actuators), the force unit, the PCM accumulator, the compressor, the pumps, the heat absorption unit, the heat removal unit, etc. The system may further comprise any of the features that have been described in the method steps, e.g. of which use is made in the method steps. The system may also comprise any of the features described with respect to the systems according to the first and/or second aspect.

The third aspect also relates to computer-readable instructions configured to - when executed - cause a control unit or system to perform the method according to any of the preceding claims.

The third aspect also relates to a control unit configured to perform the method according to any of the embodiments described above, e.g. wherein the control unit comprises the computer-readable instructions.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig 1: schematically illustrates a first embodiment of a system and method according to one or more of the aspects of the invention;
Fig 2: schematically illustrates a second embodiment of a system and method according to one or more of the aspects of the invention;
Fig 3: schematically illustrates a third embodiment of a system and method according to one or more of the aspects of the invention;
Fig. 4: schematically illustrates an embodiment of a method according to one or more aspects of the invention.

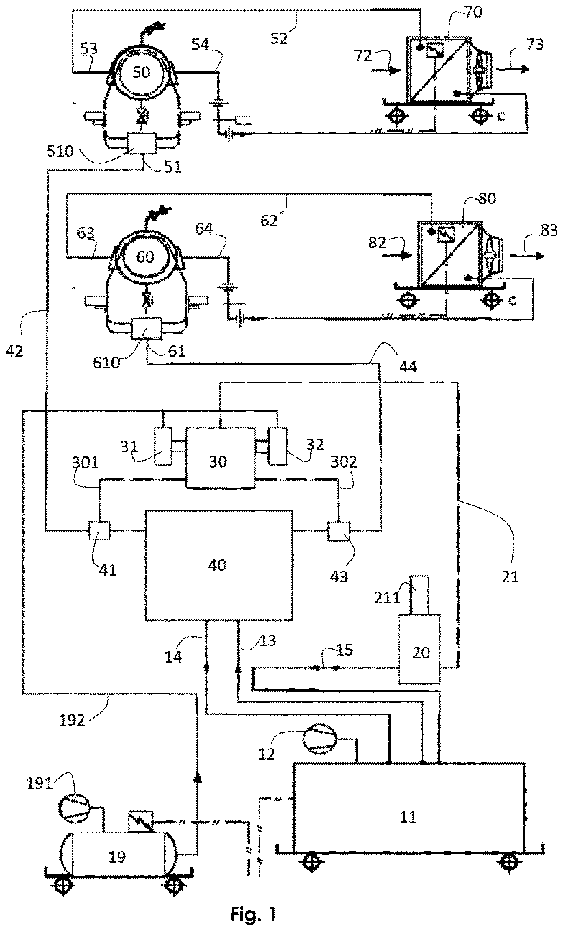

Fig. 1 schematically illustrates an embodiment of a system and method for cooling and/or heating a medium. In the particular example, the system comprises a heat absorption unit 70, which in this example fan-coil 70. The fan-coil 70 which is used for cooling warm incoming air 72 to cold outgoing air 73. The outgoing cold air 73 is used for cooling a space, e.g. a room in a building. The system further comprises heat removal unit 80, which in this example is a dry-cooler 80. In the dry-cooler 80 cold incoming air 82 is heated to warm outgoing air 83.

The system further comprises a first heat exchanger 50 and a second heat exchanger 60. The first 50 and second heat exchanger 60 each have a primary side in which a phase change material is arranged. The phase change material can be one of many suitable materials. For HVAC applications, the phase change material is usually desired to be organic, non-flammable, non-explosive, and having melting points between 0 and 30 °C. The phase change material can e.g. be BioPCM Q-20.

The first heat exchanger 50 further comprises a secondary side. In the shown example, a first secondary fluid 52 is arranged at the secondary side. The phase change material is configured to transfer thermal energy with the first secondary fluid 52. Similarly the second heat exchanger 60 comprises a secondary side in which a second secondary fluid 62 is arranged. A first 52 and second secondary fluid 62 may e.g. be water or a refrigerant. When water is used, additives to prevent freezing may be added to said water if the system is expected to be used below freezing temperatures.

The first 50 and second heat exchanger 60, in particular their primary sides, each have a second outer end (not shown in fig. 1) which is closed, and a first outer end 51, 61 which is configured to be fluidly connected to a force unit 40, which is schematically illustrated in fig. 1. At said first outer end 51, 61 both the first 50 and second heat exchanger 60 comprise a manifold 510, 610 for dividing the phase change material in a plurality of branches. This may enhance the transfer of thermal energy between the phase change material and the first 52 and second secondary fluid 62. Said branches are closed on the other end, as this is part of the second outer end of the first 50 and second heat exchanger 60.

The force unit 40 is configured to compress the phase change material in the first heat exchanger 50 and the phase change material in the second heat exchanger 60. By compressing the phase change material, a change of phase is caused. For example, compression may cause the phase change material to change from a liquid phase to a solid phase or vice versa, or from a solid phase to another solid phase or vice versa, or a supercritical phase to a solid phase or vice versa.

During the change of phase, the phase change material in the first heat exchanger 50 will absorb thermal energy from the first secondary fluid 52 or reject thermal energy that is then absorbed by the first secondary fluid 52. Similarly, the phase change material in the second heat exchanger 60 will transfer thermal energy with the second secondary fluid 62 during compression.

In the shown example, a pressurized fluid, in particular an oil, is provided to the force unit 40 for the compression of the phase change material in the first 50 or second heat exchanger 60. The system comprises a pressurized fluid unit 11, which is connected to the force unit 40 with a supply line 13 and a return line 14. The supply line 13 and return line 14 can optionally be flexible connections, e.g. a hose. The pressurized fluid unit 11 is configured to increase a pressure of the pressurized fluid, e.g. using a pump 12. In the force unit 40, the pressurized fluid may be configured to exert a pressure and/or force on an intensifier piston. This may cause the intensifier piston to move, which compresses the phase change material. In particular, the intensifier piston exerts a pressure and/or force on the phase change material and reduces a first or second heat exchanger volume. Said first or second heat exchanger volume represents the volume available for the phase change material in the first 50 or second heat exchanger 50, respectively. Although not shown in the figure, one or more supply valves can be provided in the supply line 13 and one or more return valves can be provided in the return line 14.

Since the first 50 and second heat exchanger 60 are closed on their second outer end, the phase change material cannot flow away when being compressed. The phase change material is not circulated. The phase change material is already present in the first 50 or second heat exchanger 60 when being compressed, and the phase change occurs in the respective heat exchanger 50, 60. The heat exchangers 50, 60 may further have any suitable shape or arrangement. Generally, the heat exchangers 50, 60 are configured to make a contact surface between the phase change material and the respective secondary fluid as large as possible for improving the transfer of thermal energy. For this, the heat exchangers 50, 60 may comprise a plurality of branches from the manifolds 510, 610 and/or a plurality of bends and elbows.

In the first heat exchanger 50 the phase change material can cool or heat the first secondary fluid 52, and in the second heat exchanger 60 the phase change material can cool or heat the second secondary fluid 62. In the shown example, the secondary side of the first heat exchangers 50 is fluidly connected to the fan-coil 70 and the secondary side of the second heat exchangers 60 is fluidly connected to the dry-cooler 80. The cooled secondary fluid can thus be used to absorb thermal energy of the incoming warm air 72 in the fan-coil 70. Thermal energy of the heated secondary fluid can be absorbed by the incoming cold air 82 in the dry-cooler 80 to expel this thermal energy from the system.

Although not visible is fig. 1, it may be advantageous if the secondary side of the first heat exchanger 50 can also be fluidly to connected to a dry-cooler, e.g. the dry-cooler 80. Similarly the secondary side of the second heat exchanger 60 can also be fluidly connected to a fan-coil, e.g. the fan-coil 70.

The functioning of the system can in some examples thus generally understood as follows. Using the force unit 40, the phase change material in the first heat exchanger 50 is compressed. During compression, the phase change material changes phase, e.g. from a liquid phase to a solid phase, and the temperature increases. Thermal energy is transferred from the phase change material to the first secondary fluid 52, since the phase change material is warmer than the first secondary fluid 52. The first secondary fluid 52 is circulated through the dry-cooler 80 for removing said thermal energy by transferring it to the cold incoming air 82. Then, the phase change material in the first heat exchanger 50 may be expanded. During this expansion, thermal energy is transferred from the first secondary fluid 52 to the phase change material. The first secondary fluid 52 is now circulated through the fan-coil 70, wherein the warm incoming air 72 transfers thermal energy to the first secondary fluid 52, which in turn transfers said thermal energy to the phase change material in the first heat exchanger 50. This process can be repeated until a space is sufficiently cooled with a fan-coil 70 or sufficiently heated with the dry-cooler 80. In the period that the first heat exchanger 50 is used to transfer thermal energy from the first secondary fluid 52 to the phase change material, the second heat exchanger 60 can be used to transfer thermal energy from the phase change material to the second secondary fluid 62. This allows to e.g. keep cooling the space with one of the heat exchangers 50, 60 while the thermal energy from other heat exchanger 50, 60 is removed via the dry-cooler 80.

In other embodiments, it is also possible that the first 52 and second secondary fluid 62 are air. The phase change material in the first 50 and second heat exchanger 60 may then be used to cool or heat said air, wherein said air is directly provided to a space to be cooled or heated.

In the shown example the system further comprises a PCM accumulator 20. The PCM accumulator 20 can be fluidly connected to the first heat exchanger 50 or the second heat exchanger 60 via a valve system 30. In the shown example the first heat exchanger 50 is fluidly connected to a first manifold 41 by means of a first heat exchanger connection 42, and the second heat exchanger 60 is fluidly connected to a second manifold 43 by means of a second heat exchanger connection 44. In practice, the first 42 and second heat exchanger connection 44 are preferably relatively short. The first 41 and second manifold 43 connect the first 50 and second heat exchanger 60, respectively, to the force unit 40 and to the valve system 30.

In the shown example, the valve system 30 comprises a first valve 31 for fluidly connecting the PCM accumulator 20 with the first heat exchanger 50 via the first manifold 41. The valve system 30 further comprises a second valve 32 for fluidly connecting the PCM accumulator 20 with the second heat exchanger 60 via the second manifold 43.

In other embodiments it is possible to provide a first force unit valve and a second force unit valve, e.g. on the location where the first 41 and second manifold 43 are arranged. Said first and second force unit valve could three-way valves that can be switched between at least a first and second position. In the first position the first 50 or second heat exchanger 60, respectively, is fluidly connected to the force unit 40. In the second position the first 50 or second heat exchanger 60, respectively, is fluidly connected to valve system 30 for fluidly connecting to the PCM accumulator 20.

The PCM accumulator 20 is configured to be fluidly connected with the first heat exchanger 50, when the phase change material in the first heat exchanger 50 is expanding. The PCM accumulator 20 provides additional volume for the phase change material to expand to, and thus increase the first heat exchanger volume. This improves the transfer of thermal energy and thereby the efficiency of the system. During compression of the phase change material in the first heat exchanger 50, the PCM accumulator 20 is fluidly disconnected from the first heat exchanger 50. This can be done by means of the valve system 30. The first heat exchanger volume available for the phase change material is thus decreased during compression, thereby again improving efficiency.

The PCM accumulator 20 can similarly be fluidly connected and disconnected from the second heat exchanger 60. It is to be understood, however, that at least some of the advantages of the PCM accumulator 20 can also be achieved when the PCM accumulator 20 can only be fluidly connected with one heat exchanger. This can e.g. be the case when the system only comprises a single heat exchanger or when for each heat exchanger an individual PCM accumulator is provided.

In the shown example the system also comprises an air compressor tank 19. The compressed air is used for controlling the valves in the system, which thus have pneumatic actuators. The air can be compressed using a compressor 191, and via a pneumatic supply line 192 be provided to the valve, in this case e.g. valves 31, 32 of the valve system 30. However, it is also possible to control the valves in other known ways, e.g. using electrical actuators.

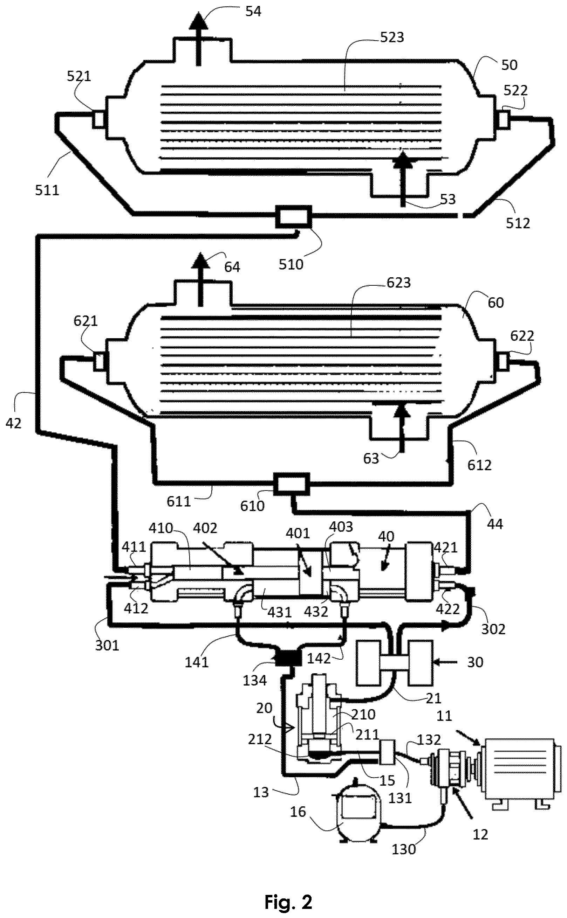

Fig. 2 shows a schematical overview of a system for cooling a medium, wherein some features are shown more graphical for illustration.

Fig. 2 for example illustrates the first heat exchanger connection 42 that connects the force unit 40 to the manifold 510. In the shown example, the manifold divides the phase change material between a first branch 511 and a second branch 512. The first branch 521 is connected to a first inlet 521. The second branch is connected to a second inlet 522. Inside the first heat exchanger 50 a plurality of branches 523 are provided. It should be understood that in practice the branches 523 may have several bends, they may e.g. be "meandering" or "serpentine-shaped". Each branch 523 is closed at its outer end, meaning that the first branch 511 and second branch 512 are not fluidly connected to each other inside the first heat exchanger 50. The closed outer ends of the branches 523 together form the second outer end of the first heat exchanger 50, which is closed.

Similarly the system comprises for the second heat exchanger 60 a first branch 611, second branch 612, first inlet 521, second inlet 622, and a plurality of branches 623 for the second heat exchanger 60.

Fig. 2 further schematically illustrates a secondary fluid inlet 53, 63 and secondary fluid outlet 54, 64 for the first and second secondary fluid, respectively. In the shown embodiment, the first or second secondary fluid come into contact with the branches 523, 623 while flowing thought the first or second heat exchanger 50, 60. The branches 523, 623 increase the contact surface between phase change material and secondary fluid, which enhances the transfer of thermal energy. Although in the illustrated examples water is used as secondary fluid, it will be understood that other secondary fluid can be heated or cooled in similar ways. For example, air can be passed through the first or second heat exchanger 50, 60 and be cooled or heated that way.

The branches 523, 623 in the first 50 and second heat exchanger 60 are preferably made from a material that has a good thermal conductivity, to improve the transfer of thermal energy. The connections 42, 44 and branches 511, 512, 611, 612 that are arranged outside of the heat exchangers 50, 60 can optionally be insulated to avoid thermal losses. All the branches 511, 512, 611, 612, 523, 623 and connections 42, 44 are preferably designed to withstand high pressures. In particular when solid phases are used in the system, pressures can become very high, e.g. above 100 MPa.

An exemplary embodiment of the force unit 40 is shown in fig. 2. In this illustration, at the left-hand side the interior of the force unit 40 is shown and on the right-hand side the exterior. The force unit 40 comprises an intensifier piston 401. A first moveable wall 402 and a second moveable wall 403 are connected to the intensifier piston 401. The first moveable wall 402 delimits a first PCM chamber 410. The first PCM chamber 410 is fluidly connected to the first heat exchanger 50, in particular the primary side of the first heat exchanger 50. The first PCM chamber 410 is configured to receive phase change material. Furthermore, the first PCM chamber 410 is part of a first heat exchanger volume, which represent a volume available for the phase change material. The first heat exchanger volume further includes the volume of the first heat exchanger connection 42, the first branch 511, the second branch 512, and the branches 523. Similarly the second moveable wall 403 delimits a second PCM chamber, which is not visible in the shown illustration.

To compress the phase change material in the first heat exchanger 50, the intensifier piston 401 is moved to the left-hand side in fig. 2. This moves the first moveable wall 403 which reduces the volume of the first PCM chamber 410 and the first heat exchanger volume. As less volume is available for the phase change material, the phase change material is compressed and the pressure increases, which eventually leads to a phase change. Said phase change can e.g. be from liquid to solid, or from solid to another solid.

The intensifier piston 401 is moved using a pressurized fluid, which can be provided as follows. Fig. 2 shows an oil tank 16, as in the shown example the pressurized fluid is an oil. A pump 12 is connected to the oil tank 16 by means of an oil connection 130. The pump 12 is part of a pressurized fluid unit 11. The pump 12 increases the pressure of the oil and pumps the oil via oil connection 132 to a first supply valve 131. The supply valve 131 has at least a first position in which the oil is further guided towards a second supply valve 134 via supply line 13. The second supply valve 134 has a first position for guiding the oil towards a first supply line 141 and a second position for guiding the oil towards a second supply line 142. The first supply line 141 is connected to a first oil chamber 431 of the force unit 40, and the second supply line is connected to a second oil chamber 432 of the force unit 40. When supplying oil to the second oil chamber 432, the pressure in said second oil chamber 432 increases and becomes greater than the pressure in the first oil chamber 431. This causes the intensifier piston 401 to move towards the left-hand side (in this schematical representation). Although not shown in fig. 2, a first return line may be connected to the first oil chamber 431 for guiding oil away when the intensifier piston 401 moves towards the left-hand side. Similarly, a second return line may be connected to the second oil chamber 432. The first and second return line may, e.g. via one or more return valves, guide the oil back toward the oil tank 16.

Furthermore illustrated in fig. 2 is the PCM accumulator 20. An accumulator line 21 connects the PCM accumulator 20 with the valve system 30. A first valve connection line 301 connects the valve system 30 to the first heat exchanger 50. In this case the first valve connection line 301 guides the phase change material into the first PCM chamber 301 via first PCM accumulator connector 412, such that phase change material can flow between the PCM accumulator 20 and the first heat exchanger 50. In this case the first PCM chamber 410 also comprises a first heat exchanger connector 411. Similarly a second valve connection line 302 connects the valve system 30 to the second heat exchanger 60 via the second PCM chamber and a second PCM accumulator connector 422. In this case the second PCM chamber also comprises a second heat exchanger connector 421. It is also possible to provide a manifold such as the first and second manifold that were shown in fig. 1, or three-way valves such as the first and second force unit valve explained above.

The valve system 30 is controlled, e.g. by a control unit, such that during expansion of the phase change material in the first heat exchanger 50, the first heat exchanger 50 is fluidly connected to the PCM accumulator 20. The phase change material can thus expand into the PCM accumulator 20, in this case via the first PCM chamber 410, the first valve connection line 301, and the accumulator line 21. The first heat exchanger volume is thus increased during expansion, as it now includes the PCM accumulator 20, the first valve connection line 301, and the accumulator line 21. The increase in volume allows further expansion of the phase change material, which enhances the transfer (in this case absorption) of thermal energy.

During compression of the phase change material in the first heat exchanger 50, on the other hand, the valve system 30 fluidly disconnects the PCM accumulator 20 from the first heat exchanger 50. In this case the first heat exchanger volume is thus decreased, and it is easier for the force unit 40 to compress the phase change material and cause the phase change. The efficiency of the system is increased.

Fig. 2 illustrates that the PCM accumulator 20 has a PCM accumulator chamber 210. The accumulator line 21 is connected to the PCM accumulator chamber 210 for supplying the phase change material therein. The PCM accumulator chamber 210 has an adjustable volume. In the shown example this is achieved because the PCM accumulator 20 is embodied as a cylinder having a piston with a moveable wall 211. In fig. 2 the moveable wall 211 is shown in a relatively low position (in this schematical representation) such that the PCM accumulator chamber 210 is relatively large. However, in the beginning of the expansion of the phase change material the moveable wall 211 may be in a higher position (in this schematical representation). During the expansion, the phase change material pushes the moveable wall 211 to increase the volume of the PCM accumulator chamber 210 and as such also the first heat exchanger volume. The gradual increase of the PCM accumulator chamber 210 allows for a steadier expansion of the phase change material.

To empty the PCM accumulator chamber 210, the moveable wall 211 may be moved to decrease the adjustable volume of the PCM accumulator chamber 210. In the shown embodiment, this is accomplished using the pressurized fluid, in this case oil. The first supply valve 131 has a second position, in which the pressurized oil coming from the pump 12 of the pressurized fluid unit 11 is guided towards the PCM accumulator 20. The PCM accumulator 20 has a pressurized fluid chamber 212 for receiving said oil. As more oil is provided into the pressurized fluid chamber 212, the pressure herein increases, which causes the moveable wall 211 to move. The phase change material is as such pushed out of the PCM accumulator chamber 210. The moveable wall 211 and pressurized fluid chamber 212 are part of a PCM accumulator emptying module.

It is further possible to provide a counterforce to the moveable wall 211 when the adjustable volume of the PCM accumulator chamber 210 is increasing. The counterforce can be controlled by controlling the pressure of the pressurized fluid in the pressurized fluid chamber. By controlling the counterforce, the pressure in the heat exchanger 50, 60 that is connected to the PCM accumulator 20 can be controlled during expansion of the phase change material. The pressure of the phase change material affects the temperature, which can as such be used for controlling the transfer of thermal energy.

It will be understood that although two heat exchangers 50, 60 are shown in fig. 2, the PCM accumulator 20 can also be applied in a system comprising only a single heat exchanger, or it is possible to provide a PCM accumulator 20 for each heat exchanger when multiple heat exchangers are present. In such cases, the phase change material will generally expand into the PCM accumulator 20, and then before compression of the phase change material the PCM accumulator 20 is emptied by forcing the phase change material back into the same heat exchanger.

In systems comprising multiple heat exchangers 50, 60, it is also possible to move phase change material from the first heat exchanger 50 to the second heat exchanger 60, or vice versa. For example, during expansion of the phase change material in the first heat exchanger 50, the phase change material can expand into the PCM accumulator 20. Then, before compression of the phase change material in the second heat exchanger 60, the valve system 30 can fluidly connect the PCM accumulator 20 to the second heat exchanger 60. The PCM accumulator 20 is emptied into the second heat exchanger 60 before compression.

In the shown embodiment, during the expansion of the phase change material in the first heat exchanger 50, the second heat exchanger volume is maintained constant. In this case that means that the volume of second PCM chamber is not changed because the intensifier piston 401 is not moved, and neither is the second heat exchanger 60 fluidly connected to the PCM accumulator 20. In particular, the second supply valve 134 is controlled such that the intensifier piston 401 is maintained in a fixed position during expansion of the phase change material in the first heat exchanger 50.

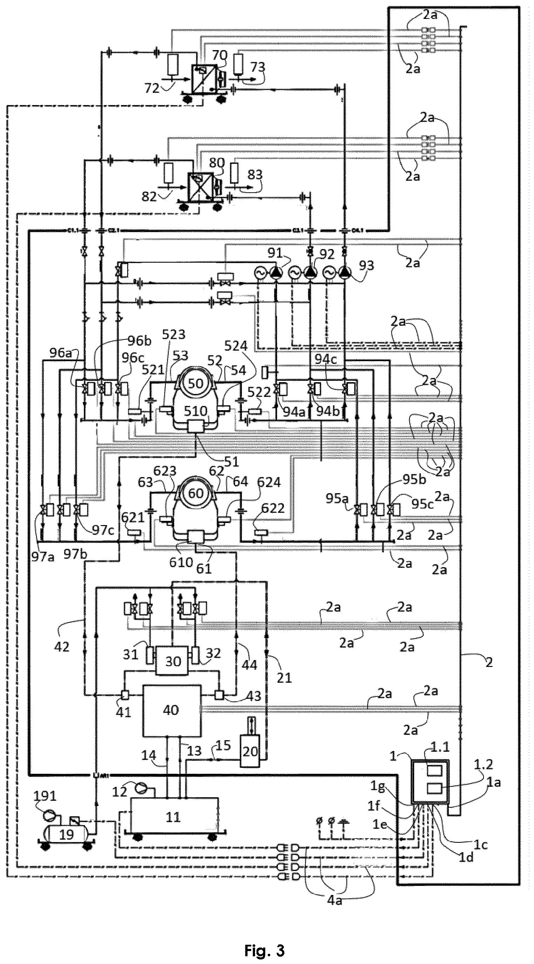

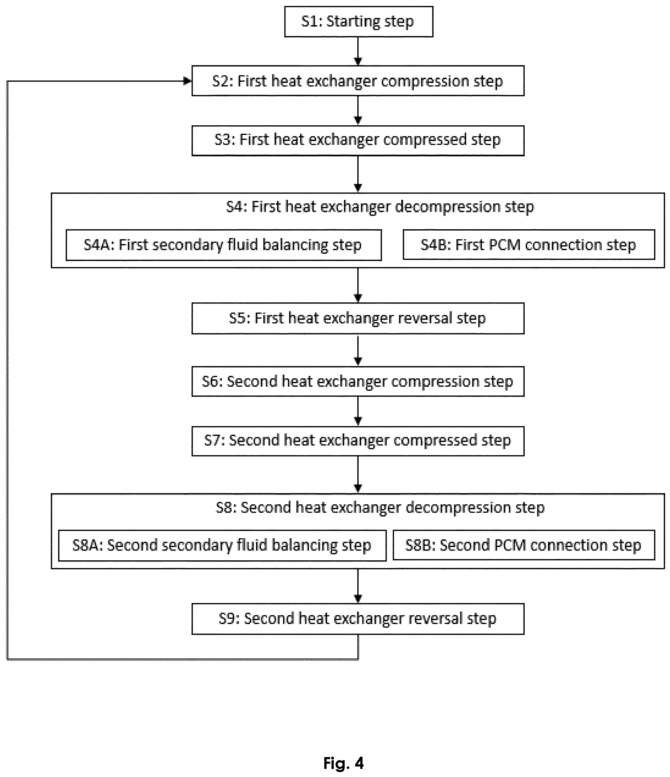

A specific method for cooling a medium is explained below with reference to fig. 3 and fig. 4. It should be noted however, that this is detailed description including many optional features and implementations. This description serves merely as an example for understanding the invention and showing one possible implementation and should therefore not be construed as limiting the scope of the claims, nor should it be interpreted as meaning that all of the described features or steps are required in all embodiments.

Fig. 3 shows a system that is similar to the system shown in fig. 1, wherein more details are represented. In particular, valves 94a-c, 95a-c, 96a-c, 97a-c allow for switching the secondary sides of the first 50 and second heat exchanger 60 between the fan-coil 70 and the dry-cooler 80. The fan-coil 70 is used for cool warm incoming air 72 into cold outgoing air 73. The cold outgoing air 73 is used for cooling a space, e.g. a room in a building. The dry-cooler 80 can e.g. be arranged outside of the building, and is used for removing the thermal energy that was absorbed to cool the warm incoming air 72.

For the sake of simplicity, the shown system is only suitable for cooling a space. It will be understood, however, that within the scope of the invention it is also possible to provide a system for heating a space, e.g. by using the warm outgoing air 83 for heating the space. It is also possible to provide a system that can both cool and heat a room, e.g. by providing two fan-coils and two dry-coolers. Furthermore, instead of the fan-coil 70 and dry-cooler 80 it is also possible to provide another heat absorption unit or another heat removal unit, e.g. any other suitable system for cooling or heating air. It may also be possible to cool or heat another gas or a liquid with the system.

Fig. 3 further illustrates that the system further comprises a control unit 1. The control unit 1 is configured to control several of the components of the system, such as the pressurized fluid unit 11, the force unit 40, the valves and pumps. The control unit 1 is also configured to receive input signals, e.g. from measurements, e.g. from temperature and/or pressure sensors. In particular, the control unit 1 is configured to control the system to perform the methods according to any of the embodiments described herein. The control unit 1 may comprise a processing unit 1.1 and a memory 1.2. The memory 1.2 may comprise computer-readable instructions, which can be executed with the processing unit 1.1.

In the shown embodiment, the control unit 1 comprises communication terminals 1a, 1c, 1d, 1e, 1f, 1g. A common signal line 2 is connected to communication terminal 1a. Furter signal lines 2a are connected to the common signal line 2. The further signal lines 2a are connected to components to be controlled by the control unit 1, and to sensors which provide sensor signals to the control unit 1. It is noted that this is a schematical illustration, and in practice the control unit 1 may communicated with the different components in any of the known ways, e.g. wired (e.g. BUS) or wireless (e.g. LoRa, WiFi, Bluetooth, ZigBee, 3G, 4G, 5G). It is further noted that although a centralized control unit 1 is illustrated, this can also be implemented in any of the known ways. For example, components (e.g. the force unit 40, fan-coil 70, dry-cooler 80, pressurized fluid unit 11, valve system 30, ...) can comprise microcontrollers which are configured to communicate with each other and with the relevant sensors.

The method may start with a starting step S1. In the starting step S1, it is defined that one of the first 50 and second heat exchanger 60 is used in a cold mode and the other of the first 50 and second heat exchanger 60 is used in a warm mode. For this example, it will be considered that the first heat exchanger 50 is operated in the warm mode and the second heat exchanger 60 in the cold mode.

The valves are provided with actuators which are controlled by the control unit 1. In this case the first valves 31 and second valve 32 are controlled by pneumatic actuators, and the other valves 94a, 94b, 94c, 95a, 95b, 95c, 96a, 96b, 96c, 97a, 97b, 97c by electric actuators.

In the shown example, the control unit 1 is configured to control several valves 94a, 94b, 94c, 95a, 95b, 95c, 96a, 96b, 96c, 97a, 97b, 97c, a warm circulation pump 92, a cold circulation pump 93, and a mixing pump 96. Initially each of the valves 94a, 94b, 94c, 95a, 95b, 95c, 96a, 96b, 96c, 97a, 97b, 97c is in a closed position, meaning that no secondary fluid can flow through. Also first valve 31 and the second valve 32 are controlled by the control unit 1 and are initially in a closed position.

The first heat exchanger 50 being used in the warm mode means that thermal energy will be transferred from the phase change material to the first secondary fluid 52. To expel this thermal energy from the system, the secondary side of the first heat exchanger 50 is fluidly connected to the heat removal unit 80, in this case the dry-cooler 80. This is done by opening valves 94b and 96a. The warm circulation pump 92 is further started for circulating the first secondary fluid 52 between the first heat exchanger 50 and the dry-cooler 80.

The second heat exchanger 60 being used in the cold mode means that thermal energy will be transferred from second secondary fluid 62 to the phase change material. To absorb this thermal energy, the secondary side of the second heat exchanger 60 is fluidly connected to the heat absorption unit 70, in this case the fan-coil 70. This is done by opening valves 95c and 97b. The cold circulation pump 93 is further started for circulating the second secondary fluid 62 between the second heat exchanger 60 and the fan-coil 70.

When the system comprises the PCM accumulator 20, the starting step may include emptying the PCM accumulator 20. During this step, at least a part of the phase change material in the PCM accumulator 20 is forced into the first heat exchanger 50. This is under the assumption that the first heat exchanger 50 is used in the warm mode and will first be compressed, otherwise the PCM accumulator emptying step may force phase change material into the second heat exchanger 60. The first valve 31 of the valve system 30 may be controlled to fluidly connect the PCM accumulator 20 with the first heat exchanger 50.

The PCM accumulator 20 may comprise a moveable wall, which can be moved by providing pressurized fluid from the pressurized fluid unit 11 to the PCM accumulator 20 via supply line 15. The supply line 15 may be a flexible connection, e.g. a hose. The pressurized fluid unit 11 is started for pressurizing the pressurized fluid using the pump 12, e.g. up to a pressure setpoint of the phase change material. Said pressure setpoint may e.g. 100 MPa. The pressurized fluid pushes the moveable wall to push the accumulated phase change material out of the PCM accumulator 20 and into the first heat exchanger 50. Said accumulated phase change material may still be present from a previous cooling cycle. It will be understood that in some embodiments the PCM accumulator 20 may be emptied during a stopping step, in that case it may not be required to empty the PCM accumulator 20 as a part of the starting step.

Once a closing setpoint is reached, the first valve 31 of the valve system 30 may be controlled to fluidly disconnect the first heat exchanger 50 from the PCM accumulator 20. It may be preferred that this is done while the pressurized fluid is still being provided to the PCM accumulator 20, to avoid a partial loss or pressure of the phase change material.

The closing setpoint may e.g. correspond to a pressure of the phase change material, which is below the pressure setpoint, e.g. at 90 MPa. A first pressure sensor 523 and a second pressure sensor 623 are schematically illustrated in fig. 3. The first pressure sensor 523 is provided for measuring the pressure in the first heat exchanger 50 and a second pressure sensor 623 is provided for measuring the pressure in the second pressure sensor 60. Alternatively, or in combination, the pressure of the phase change material can also be deducted from the pressure of the pressurized fluid or from the temperature of the phase change material. Temperature sensors 524, 624 can be provided for measuring the temperature of the phase change material. This can e.g. be surface mounted temperature sensors.

At least a part of the pressurized fluid in the PCM accumulator 20 is released from the PCM accumulator 20, such that the pressure is reduced. This allows expansion of phase change material into the PCM accumulator in later steps. The release of pressurized fluid can happen during the starting step S1, although this is not required. Optionally the pressurized fluid unit 11 is stopped, although it can also be kept on in preparation for the next steps.

The control unit 1 may be configured to create a starting step variable, which can indicate when the starting step has been completed. The control unit 1 may store this variable, e.g. in the memory 1b, such that when the method is restarted without stopping, the starting step is not performed again.

The method may then proceed to a first heat exchanger compression step S2. In this step S2, the phase change material in the first heat exchanger 50 is compressed by the force unit 40.

Pressurized fluid is provided from the pressurized fluid unit 11 to the force unit 40 for moving the intensifier piston 401 in the force unit 40. This compresses the phase change material. In particular, the first PCM chamber 410 is reduced and as such also the first heat exchanger volume. During the compression, the phase change material in the first heat exchanger 50 will change phase, e.g. from liquid to solid or from solid to another solid. It should be noted that in this example it is assumed that the phase change material will reject thermal energy during compression; however, this may depend on the phase change material that is used. During the compression, the PCM accumulator 20 is kept fluidly disconnected from the first heat exchanger 50.

While the phase change material is changing phase, thermal energy is transferred to the first secondary fluid 52. To reject this thermal energy from the system, the first secondary fluid 52 is still circulated through the dry-cooler 80 by means of the warm circulation pump 92. Simultaneously the second heat exchanger 60 is used in the cold mode, meaning that second secondary fluid 62 is still circulated through the fan-coil 70 by means of the cold circulation pump 93.

The first heat exchanger compression step may be completed when the phase change material reaches a pressure setpoint, e.g. 80 MPa. The pressure of the phase change material also determines the temperature, so by controlling the pressure setpoint the temperature can be controlled. This allows to control the transfer of thermal energy. The desired temperature of the phase change material may depend on the temperature of the first secondary fluid.

It is noted that in the shown embodiment, the movement of the intensifier piston 401 causes the second PCM chamber to increase. The second heat exchanger volume is thus increased. The phase change material in the second heat exchanger 60 is partially decompressed during the first heat exchanger compression step S2.

The method then optionally comprises a first heat exchanger compressed step S3. During the first heat exchanger compressed step S3, the phase change material in the first heat exchanger 50 is kept compressed. This can e.g. be achieved by keeping the intensifier piston of the force unit 40 in a fixed position. This can e.g. be done by controlling supply and return valves for the pressurized fluid. It is also possible to control an intensifier piston lock to lock the intensifier piston in the fixed position. It is also possible to fluidly disconnect the first heat exchanger 50 from the force unit 40 with a first force unit valve, when present. Furthermore, the PCM accumulator 20 is kept fluidly disconnected from the first heat exchanger 50.

In particular, the supply and return valves for the pressurized fluid may be closed to lock the pressurized fluid in the first and second oil chamber of the force unit 40. In this case, it may be advantageous to stop the pressurized fluid unit 11, or at least the pump 12, to save energy. Optionally, a timer is started when the pump 12 is stopped. The first heat exchanger compressed step S3 may be completed when the timer exceeds a threshold time, e.g. 60 seconds.

In this example, during the first heat exchanger compressed step, the first heat exchanger 50 is still used in the cold mode and the second heat exchanger 60 is still used in the warm mode. The first secondary fluid 52 is still circulated through the dry-cooler 80 and the second secondary fluid 62 is still circulated through the fan-coil 70. The second secondary fluid 62 should be cooled in the second heat exchanger 60 to be able to cool the warm incoming air 72 in the fan-coil.

While absorbing thermal energy, the phase change material will expand. If it contained a solid phase, it may liquify during this process, i.e. a phase change from solid to liquid phase. To allow the phase change material in the second heat exchanger 60 to absorb more thermal energy, the PCM accumulator 20 can be fluidly connected to the second heat exchanger 60. The second valve 32 of the valve system 30 can be controlled accordingly. The second heat exchanger volume is as such increased. The phase change material in the second heat exchanger 60 is further decompressed.

An inlet temperature sensor 621 measures an inlet temperature of the second secondary fluid 62 before it enters the second heat exchanger 60. An outlet temperature sensor 622 measures an outlet temperature of the second secondary fluid 62 when exiting the second heat exchanger. The control unit 1 is configured to receive a measurement signal 2a from the inlet temperature sensor 621 and from the outlet temperature sensor 622. The first heat exchanger compressed step S3 may be completed when a difference between the inlet temperature and the outlet temperature is below a difference threshold, e.g. 3K or 0.5K. This may indicate that the phase change material in the second heat exchanger 60 is not able to absorb enough thermal energy anymore for cooling the warm incoming air 72. To avoid that a deviating batch of secondary fluid causes incorrect results, it may be determined that the difference must be below the difference threshold for several seconds. Preferably, the first heat exchanger compressed step S3 is completed when the first one of exceeding the threshold time and falling below the difference threshold occurs. Optionally the valve system 30 is controlled to fluidly disconnect the second heat exchanger 60 from the PCM accumulator 20 at the end of the first heat exchanger compressed step S3.

The inventors have found that is advantageous to apply a first secondary fluid balancing step S4A after the first heat exchanger compressed step. Although the first secondary fluid balancing step is optional and can be omitted, the efficiency of the process and thus the COP can be increased. In this step, the first secondary fluid 52 and the second secondary fluid 62 are fluidly connected to each other and mixed. This is done by closing valves 94b, 95c, 96a and 97b and opening valves 94a, 95a, 96c, and 97c. The circulating pumps 92 and 93 can be stopped. At this moment, the fan-coil 70 and dry-cooler 80 are thus fluidly disconnected from both the first 50 and second heat exchanger 60.

A first advantage of the mixing the first 52 and second secondary fluid 62 is that their temperature will converge towards an intermediate temperature. Whereas before the first secondary fluid 52 was relatively warm because the first heat exchanger 50 was used in the warm mode, the first heat exchanger 50 will hereafter be used in the cold mode. The first secondary fluid 52 will then also be cooled. The opposite is true for the second secondary fluid 62 and the second heat exchanger 60. By mixing the first 52 and second secondary fluid 62 thermal energy is transferred between them. This reduces the amount of thermal energy that must be transferred by the phase change material, and thereby increases the efficiency.

Furthermore, the mixed first 52 and second secondary fluid 62 are circulated through the secondary sides of the first 50 and second heat exchangers 60. Mixing pump 91 is started for circulating the mixed first 52 and second secondary fluid 62. This allows to effectively transfer thermal energy from the warm phase change material in the first heat exchanger 50 to the cold phase change material 60 in the second heat exchanger 60. This also increases the efficiency, since in the next steps the first heat exchanger 50 will be used in the cold mode and the second heat exchanger 60 in the warm mode.

When the mixing pump 91 is started, a timer can be started. When a threshold time is exceeded, it can be determined that the first secondary fluid balancing step is completed. It may preferable that the first secondary fluid balancing step does not take too long, because during this time the space to be cooled is not being cooled, since the fan-coil 70 is not fluidly connected to the first 50 or second heat exchanger 60.

Similarly to the inlet temperature sensor 621 and outlet temperature sensor 622 for the second heat exchanger 60, an inlet temperature sensor 521 measures an inlet temperature of the first secondary fluid 52 before it enters the second heat exchanger 50, and an outlet temperature sensor 522 measures an outlet temperature of the first secondary fluid 52 when exiting the first heat exchanger 50.

It can be determined that the first secondary fluid balancing step is completed when one of the outlet temperatures becomes smaller or larger than or equal to the associated inlet temperature. In this context, "becoming smaller or equal" means that it was first larger decreased until it was smaller or equal, and "becoming larger or equal" means that it was first smaller and increased until it became larger or equal. In the shown example, the first heat exchanger 50 was used in the warm mode, so the balancing step may be completed when the outlet temperature of the first heat exchanger 50 becomes equal to or smaller than the inlet temperature of the first heat exchanger 50. Similarly, the balancing step may be completed when the outlet temperature of the second heat exchanger 60 becomes equal to or larger than the inlet temperature of the second heat exchanger 60. Preferably, the first secondary fluid balancing step is completed when at least one of the threshold time or the average temperature criterium is met.

Fig. 4 illustrates that the method further comprises a first heat exchanger decompression step S4. In the shown example, the optional first secondary fluid balancing step S4A can be part of the first heat exchanger decompression step S4. As is explained below, this may entail fluidly connecting the first heat exchanger 50 to the PCM accumulator. However, this is not required. It is also possible to keep the phase change material in the first heat exchanger compressed during the balancing of the secondary fluids.

During the first heat exchanger decompression step S4, the phase change material in the first heat exchanger 50 is decompressed. Thus, the pressure is reduced and/or the first heat exchanger volume is increased. This may entail that said phase change material expands and may change phase, e.g. liquify. In the shown example, the first heat exchanger decompression step S4 is combined with the first secondary fluid balancing step S4A. Furthermore, the system comprises the PCM accumulator 20 for the phase change material to expand in.

The first valve 31 of the valve system 30 may therefore be controlled to fluidly connect the PCM accumulator 20 with the first heat exchanger 60. This can e.g. be done after the mixing pump 91 has been started. The first heat exchanger volume is now increased because it also comprises the PCM accumulator. While the first 52 and second secondary fluid 62 are being mixed and thermal energy is transferred between the first 50 and second heat exchanger 60, the phase change material of the first heat exchanger expands into the PCM accumulator 20. During this expansion, the phase change material changes phase, e.g. from solid to another solid or from solid to liquid.

The method may also comprise an optional first PCM connection step S4B. The first PCM connection step S4B can be performed as an alternative of the first secondary fluid balancing step S4A, or simultaneous, or before or after said first secondary fluid balancing step S4A. The first PCM connection step S4B can be part of the first heat exchanger decompression step S4.

The first PCM connection step S4B entails fluidly connecting the primary side of the first heat exchanger 50 to the primary side of the second heat exchanger 60. In the shown system, this can be achieved by controlling the valve system 30 to fluidly connect the first valve 31 and second valve 32. Then, the phase change material in the first heat exchanger 50 is mixed with the phase change material in the second heat exchanger 60.

Before the first PCM connection step S4B, the pressure in the first heat exchanger 50 may be higher than the pressure in the second heat exchanger 60. However, in subsequent steps the second heat exchanger will be compressed. During the first PCM connection step S4B, the phase change material will expand once the valve system 30 provides the fluid connection. The mixed phase change material will converge towards an intermediate pressure. This reduced the amount of work required in subsequent steps for compressing the phase change material in the second heat exchanger 60.

The method further comprises a first heat exchanger reversal step S5. In this example, this step entails that is defined that now the first heat exchanger 50 will be used in the cold mode and the second heat exchanger 60 will be used in the warm mode. Valves 94a, 95a, 96c, and 97c are closed and the mixing pump 91 is stopped. Valves 94c and 96b are opened to connect the first heat exchanger 50 to the fan-coil 70. Cold circulation pump 93 is started to circulate the first secondary fluid 92 through the fan-coil 70 and the first heat exchanger 50. The thermal energy absorbed from the warm incoming air 72 is thus transferred to the phase change material in the first heat exchanger 50, which can absorb much thermal energy because a lot of thermal energy has been expelled in the previous steps.

Valves 95b and 97a are opened to fluidly connect the second heat exchanger 60 with the dry-cooler 80. Circulation pump 92 is started to circulate the second secondary fluid 62 through the dry-cooler 80 and the second heat exchanger 60 to remove the thermal energy that the phase change material in the second heat exchanger 60 has absorbed in the previous steps.

The first heat exchanger reversal step further includes emptying the PCM accumulator 20. First, the first valve 31 of the valve system 30 is controlled to fluidly disconnect the PCM accumulator 20 from the first heat exchanger 50. Then, the second valve 32 of the valve system 30 is controlled to fluidly connect the PCM accumulator 20 with the second heat exchanger 60. The pressurized fluid unit 11 can then be started to provide pressurized fluid to the PCM accumulator 20 via supply line 15. This moves the moveable wall and forces the phase change material from the PCM accumulator 20 to the second heat exchanger 60. The phase change material in the second heat exchanger 60 will in the following steps be compressed, and by now increasing the amount of phase change material present in the second heat exchanger the pressure can be increased, and the efficiency and COP are improved. In the explained example, at least a part of said phase change material had in the previous steps expanded out of the first heat exchanger 50. This advantageously reduces the total amount of phase change material required.

Similarly as during the emptying of the PCM accumulator during the starting step, the second valve 32 of the valve system 30 may be closed when a closing setpoint is reached, measured by pressure sensor 623. Thereafter, the pressurized fluid unit 11 may be stopped, although this is not required.

Now that the first 50 and second heat exchanger have been functionally reversed, the method may comprise similar steps wherein the heat exchangers 50, 60 are reversed. For example, a second heat exchanger compression step S6, a second heat exchanger compressed step S7, a second heat exchanger decompression step S8, which may include a second secondary fluid balancing step S8A and/or a second PCM connection step S8B, and a second heat exchanger reversal step S9. These steps can be performed in similar ways as the steps described so far, mutatis mutandis. As the skilled person will understand this from the description above, these steps will not be explained in further detail.

After the second heat exchanger reversal step S9, the method can be restarted again from the first heat exchanger compression step S2. The starting step S1 need not be repeated, which the control unit 1 recognizes due to the starting step variable. This process can be repeated until the space to be cooled has been cooled sufficiently, or a user ends the process.

Although fig. 3 only shows a single fan-coil 70 and dry-cooler 80, it is also possible to connect each of the heat exchangers to a plurality of fan-coils or a plurality of dry-coolers. Said pluralities can be arranged in series of in parallel. Furthermore, a single fan-coil can also be used to cool more than one space and a single dry-cooler can be used to heat more than one space.

From the description above it can be seen that the inventors have thought of several inventive aspects for systems and methods for cooling a medium. Three aspects are explicitly described, but the skilled person understands that these aspects or features/embodiments described therein can easily be combined for advantageous effects. Generally, the systems described herein relate to a force unit which compresses phase change material in at least one heat exchanger. Since the heat exchanger is closed at an outer end, the phase change material cannot circulate as in traditional HVAC systems. The compression, therefore, causes a phase change, which may e.g. include a solid phase. The phase change material exchanges thermal energy with a secondary fluid. The secondary fluid itself can be used for e.g. for air-conditioning a space, or it can used as intermediate fluid for cooling or heating another fluid, e.g. air which is then used for air-conditioning a space.

The first aspect may provide a PCM accumulator. This can advantageously improve efficiency by increasing or decreasing a first and/or second heat exchanger volume as desired.

According to the second aspect, a second heat exchanger volume can be maintained constant during expansion of phase change material in the first heat exchanger. This may be advantageous as it is no longer required to compress the phase change material in one heat exchanger at the same time as expanding the phase change material in the other heat exchanger.

The third aspect relates to several advantageous ways a system for cooling or heating a medium can be used.

Although the systems described only have one or two heat exchangers comprising phase change material, it will be understood than more than that can be used. This can e.g. be implemented in similar ways as described in WO2021064202A1.

It is noted that within this description terms such as "line", "pipe", "conduit", "connection" may be used interchangeable, and may be embodied as any customary component which allows a fluid to flow. Usually these components will have a circular cross-section; however, they are not limited thereto. These components may be made of any suitable material, e.g. a plastic or a metal such as steel. The material may in particular depend on the temperatures and pressure that are expected within these components.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

One or more aspects of the invention can be summarized according to any of the following clauses:
1. A system for cooling and/or heating at least one medium, comprising:
   - a first heat exchanger comprising a first outer end and a second outer end, wherein the second outer end is closed, wherein the first heat exchanger is configured to receive a phase change material,
   - a force unit configured to be fluidly connected to the first outer end of the first heat exchanger and configured to compress the phase change material in the first heat exchanger,
   - a PCM accumulator configured to receive phase change material,
   - a valve system fluidly connected to the first heat exchanger and the PCM accumulator, and
   - a control unit, wherein the control unit is configured to control the valve system to:
      - during compression of the phase change material in the first heat exchanger by the force unit, fluidly disconnect the PCM accumulator from the first heat exchanger, and
      - during expansion of the phase change material in the first heat exchanger, fluidly connect the PCM accumulator with the first heat exchanger for allowing phase change material to expand into the PCM accumulator.
2. The system according to clause 1, wherein the PCM accumulator has a PCM accumulator chamber having an adjustable volume, wherein the PCM accumulator chamber is configured to increase during expansion of the phase change material.
3. System according to clause 2, wherein the PCM accumulator comprises a moveable wall configured to be moved, for increasing the adjustable volume of the PCM accumulator chamber, e.g. by pressure exerted by the phase change material.
4. System according to any of the preceding clauses, further comprising a PCM accumulator emptying module configured to release at least a part of the phase change material from the PCM accumulator, wherein the control unit is configured to control the PCM accumulator emptying module.
5. System according to any of the preceding clauses, wherein the PCM accumulator is a cylinder with a piston, wherein the piston is configured to move for increasing and decreasing an adjustable volume of a PCM accumulator chamber.
6. System according to any of the preceding clauses, further comprising a second heat exchanger comprising a first outer end and a second outer end, wherein the second outer end is closed, wherein
   - the second heat exchanger is configured to receive phase change material
   - the force unit is configured to be fluidly connected to the first outer end of the second heat exchanger and configured to compress the phase change material in the second heat exchanger,,
   - the valve system is fluidly connected to the second heat exchanger, and
   - the control unit is configured to control the valve system and the PCM accumulator emptying module to
      - before compression of the phase change material in the second heat exchanger, release phase change material from the PCM accumulator to the second heat exchanger, wherein at least a part of said phase change material has expanded from the first heat exchanger into the PCM accumulator.
7. System according to the previous clause, wherein the control unit further is configured to control the valve system to:
   - during compression of the phase change material in the second heat exchanger by the force unit, fluidly disconnect the PCM accumulator from the second heat exchanger,
   - during expansion of the phase change material in the second heat exchanger, fluidly connect the PCM accumulator with the second heat exchanger for allowing phase change material to expand into the PCM accumulator.
8. System according to any of the preceding clauses, further comprising
   - a first force unit valve arranged between the force unit and the first heat exchanger, wherein the control unit is configured to control the first force unit valve to fluidly disconnect the first heat exchanger from the force unit during expansion of the phase change material in the first heat exchanger, and/or
   - a second force unit valve arranged between the force unit and the second heat exchanger, wherein the control unit is configured to control the second force unit valve to fluidly disconnect the second heat exchanger from the force unit during expansion of the phase change material in the second heat exchanger.
9. System according to any of the preceding clauses, further comprising:
   - a second heat exchanger comprising a first outer end and a second outer end, wherein the second outer end is closed, wherein the second heat exchanger is configured to receive phase change material,
   - wherein the force unit is configured to change a first heat exchanger volume and/or a second heat exchanger volume for compressing the phase change material in the first heat exchanger and/or second heat exchanger, respectively,
   - wherein the control unit is configured to:
      - maintain the second heat exchanger volume constant during expansion of phase change material in the first heat exchanger, and
      - maintain the first heat exchanger volume constant during the expansion of phase change material in the second heat exchanger.
10. Method for cooling and/or heating at least one medium, comprising a step of using a system according to any of the preceding clauses.
11. Method for cooling and/or heating at least one medium using a system comprising a first heat exchanger, a PCM accumulator, and a valve system fluidly connected to the first heat exchanger and the PCM accumulator,
   wherein the method comprises the following steps:
   - fluidly disconnecting the PCM accumulator from the first heat exchanger by means of the valve system,
   - compressing a phase change material in the first heat exchanger, and keeping the PCM accumulator fluidly disconnected from the first heat exchanger during said compression,
   - fluidly connecting the PCM accumulator to the first heat exchanger by means of the valve system,
   - allowing expansion of the phase change material in the first heat exchanger, and keeping the PCM accumulator fluidly connected with the first heat exchanger during said expansion, thereby allowing phase change material to expand into the PCM accumulator.
12. Method according to the previous clause, further comprising a step of increasing a PCM accumulator chamber having an adjustable volume during expansion of the phase change material.
13. Method according to any of the previous method clauses, further comprising the step of releasing at least a part of the phase change material in the PCM accumulator into the first heat exchanger before the steps of fluidly disconnecting the PCM accumulator from the first heat exchanger and compressing the phase change material in the first heat exchanger.
14. Method according to any of the previous method clauses, wherein the system further comprises a second heat exchanger, wherein the method further comprises the following step after the expansion of the phase change material in the first heat exchanger:
   - releasing phase change material from the PCM accumulator to the second heat exchanger, wherein at least a part of said phase change material has expanded from the first heat exchanger into the PCM accumulator
   - fluidly disconnecting the PCM accumulator from the second heat exchanger,
   - compressing the phase change material in the second heat exchanger, and keeping the PCM accumulator fluidly disconnected from the second heat exchanger during said compression.
15. Method according to any of the previous method clauses, wherein the method further comprises the following steps:
   - fluidly disconnecting the first heat exchanger from the force unit during expansion of the phase change material in the first heat exchanger, and/or
   - fluidly disconnecting the second heat exchanger from the force unit during expansion of the phase change material in the second heat exchanger.
16. Method according to any of the preceding method clauses, wherein the system further comprises a second heat exchanger, and the force unit is configured to be fluidly connected the second heat exchanger, wherein the method comprises the following steps:
   - during expansion of the phase change material in the first heat exchanger: maintaining a second heat exchanger volume constant
   - compressing the phase change material in the second heat exchanger with the force unit by changing the second heat exchanger volume,
   - expanding the phase change material in the second heat exchanger, and during said expansion maintaining a first heat exchanger volume constant.
17. System or method according to any of the preceding clauses, wherein the phase change of the phase change material includes an at least partial phase change from solid to another solid or vice versa, or from liquid to solid or vice versa, or from supercritical to solid or vice versa.
101. A system for cooling and/or heating at least one medium, comprising:
   - a first heat exchanger comprising a first outer end and a second outer end, wherein the second outer end is closed, wherein the first heat exchanger is configured to receive phase change material
   - a second heat exchanger comprising a first outer end and a second outer end, wherein the second outer end is closed, wherein the second heat exchanger is configured to receive phase change material,
   - a force unit configured to be fluidly connected to the first outer end of the first heat exchanger and to the first outer end of the second heat exchanger, wherein the force unit is configured to compress the phase change material in the first heat exchanger by changing a first heat exchanger volume, and/or to compress the phase change material in the second heat exchanger by changing a second heat exchanger volume
   - a control unit configured to control at least the force unit, wherein the control unit is configured to:
      - maintain the second heat exchanger volume constant during expansion of phase change material in the first heat exchanger, and
      - maintain the first heat exchanger volume constant during the expansion of phase change material in the second heat exchanger.
102. System according to clause 101, wherein the force unit comprises an intensifier piston, wherein the control unit is configured to move the intensifier piston for changing the first and second heat exchanger volume.
103. System according to clause 102, wherein the control unit is configured to maintain the intensifier piston in a fixed position during expansion of the phase change material in the first heat exchanger and during expansion of the phase change material in the second heat exchanger.
104. System according to clause 102 or clause 103, wherein
   - the force unit comprises
      - a first PCM chamber, wherein the first PCM chamber is configured to be
         - fluidly connected to the first heat exchanger and
         - part of the first heat exchanger volume, and
      - a second PCM chamber, wherein the second PCM chamber is configured to be
         - fluidly connected to the second heat exchanger and
         - part of the second heat exchanger volume,
   - the intensifier piston is configured
      - to reduce a volume of the first PCM chamber for compressing the phase change material in the first heat exchanger, and
      - to reduce a volume of the second PCM chamber for compressing phase change material in the second heat exchanger.
105. System according to any of the preceding clauses 101-104, wherein the force unit is configured to be activated by a pressurized fluid which is supplied via at least one supply valve, wherein the control unit is configured to control the at least one supply valve for maintaining the first heat exchanger volume and/or the second heat exchanger volume constant.
106. System according to any of the preceding clauses 102-105, wherein the system further comprises an intensifier piston lock configured to lock the intensifier piston in a fixed position, wherein the control unit is configured to control the intensifier piston lock for maintaining the first heat exchanger volume and/or the second heat exchanger volume constant.
107. System according to any of the preceding clauses 102-16, further comprising
   - a first force unit valve arranged between the force unit and the first heat exchanger, wherein the control unit is configured to control the first force unit valve to fluidly disconnect the first heat exchanger from the force unit for maintaining the first heat exchanger volume constant, and/or
   - a second force unit valve arranged between the force unit and the second heat exchanger, wherein the control unit is configured to control the second force unit valve to fluidly disconnect the second heat exchanger from the force unit for maintaining the second heat exchanger volume constant.
108. System according to any of the preceding clauses 101-107, further comprising a PCM accumulator and a valve system, wherein the control unit is configured control the valve system to fluidly connect the first heat exchanger to the PCM accumulator during expansion of the phase change material in the first heat exchanger and/or to fluidly connect the second heat exchanger to the PCM accumulator during expansion of the phase change material in the second heat exchanger.
109. Method for cooling and/or heating at least one medium, comprising a step of using a system according to any of the preceding clauses 101-108.
110. Method for cooling and/or heating at least one medium with a system comprising a first heat exchanger, a second heat exchanger, and a force unit configured to be fluidly connected to the first heat exchanger and the second heat exchanger,
   wherein the method comprises the following steps:
   - compressing the phase change material in the first heat exchanger with the force unit by changing a first heat exchanger volume,
   - expanding the phase change material in the first heat exchanger, and during said expansion maintaining a second heat exchanger volume constant,
   - compressing the phase change material in the second heat exchanger with the force unit by changing the second heat exchanger volume,
   - expanding the phase change material in the second heat exchanger, and during said expansion maintaining the first heat exchanger volume constant.
111. Method according to the preceding clause, wherein the steps of compressing the phase change material include moving an intensifier piston.
112. Method according to the preceding clause, wherein maintaining the first and/or second heat exchanger volume constant includes keeping the intensifier piston in a fixed position.
113. Method according to the preceding clause, wherein the steps of compressing the phase change material include providing a pressurized fluid to the force unit, wherein the pressurized fluid is used for keeping the intensifier piston in the fixed position when maintaining the first and/or second heat exchanger volume constant.
114. Method according to any of the preceding method clauses 110-113, wherein the system further comprises a PCM accumulator, wherein the method further comprises a step of fluidly connecting the PCM accumulator with the first heat exchanger during expansion of the phase change material in the first heat exchanger, and/or a step of fluidly connecting the PCM accumulator with the second heat exchanger during expansion of the phase change material in the second heat exchanger.
115. Method according to any of the preceding method clauses 110-114, wherein maintaining the first heat exchanger volume and/or the second heat exchanger volume constant includes maintaining the intensifier piston in a fixed position using an intensifier piston lock.
116. System or method according to any of the preceding clauses 110-115, wherein the phase change of the phase change material includes an at least partial solid phase, e.g. a phase change from solid to another solid or vice versa, or from liquid to solid or vice versa.
201. Method for heating and/or cooling at least one medium, using a system which comprises,
   - a first heat exchanger configured for transfer of thermal energy between phase change material arranged at a primary side and a first secondary fluid at a secondary side,
   - a second heat exchanger configured for transfer of thermal energy between the phase material arranged at a primary side and a first secondary fluid at a secondary side,
   - a force unit configured to compress the phase change material in the first heat exchanger by changing a first heat exchanger volume and to compress the phase change material in the second heat exchanger by changing a second heat exchanger volume,
   wherein the method comprises the following steps:
   - a starting step, wherein it is defined that one of the first and second heat exchanger is used in a cold mode and the other of the first and second heat exchanger is used in a warm mode;
   - a first heat exchanger compression step, which includes compressing phase change material in the first heat exchanger, during which transfer of thermal energy is caused between the phase change material in the first heat exchanger and the first secondary fluid;
   - a first heat exchanger compressed step, which includes causing transfer of thermal energy between the phase change material in the second heat exchanger and the second secondary fluid, while keeping the phase change material in the first heat exchanger compressed;
   - a first heat exchanger decompression step, wherein the phase change material in the first heat exchanger is decompressed;
   - a first heat exchanger reversal step, wherein it is defined that the heat exchanger that was previously used in cold mode will now be used in warm mode, and the heat exchanger that was previously used in warm mode will now be used in cold mode;
   - a second heat exchanger compression step, which includes compressing phase change material in the second heat exchanger, during which transfer of thermal energy is caused between the phase change material in the second heat exchanger and the second secondary fluid;
   - a second compressed step, which includes causing transfer of thermal energy between the phase change material in the first heat exchanger and the first secondary fluid, , while keeping the phase change material in the second heat exchanger volume compressed;
   - a second heat exchanger decompression step, wherein the phase change material in the second heat exchanger is decompressed.
202. Method according to clause 201, wherein the first heat exchanger decompression step is performed before the second heat exchanger compression step.
203. Method according to clause 201 or clause 202, further comprising a PCM connection step, which is performed after the first heat exchanger compressed step and before the second heat exchanger compression step, and optionally as part of the first heat exchanger decompression step, wherein the PCM connection step comprises
   - fluidly connecting the primary side of the first heat exchanger to the primary side of the second heat exchanger, and
   - mixing the phase change material in the first heat exchanger with the phase change material in the second heat exchanger.
204. Method according to any of the preceding clauses 201-203, wherein the during the first heat exchanger compressed step the phase change material in the second heat exchanger expands while the first heat exchanger volume is kept constant, and/or during the second heat exchanger compressed step the phase change material in the first heat exchanger expands while the second heat exchanger volume is kept constant.
205. Method according to any of the preceding clauses 201-204, wherein the system further comprises a PCM accumulator, wherein the method comprises the following steps:
   - before the first heat exchanger compression step: forcing at least a part of the phase change material from the PCM accumulator into the first heat exchanger,
   - during the first heat exchanger compression step: before compressing the phase change material, fluidly disconnecting the PCM accumulator from the first heat exchanger,
   - during the first heat exchanger decompression step: letting the phase change material in the first heat exchanger expand, wherein the method further includes, before the expansion, fluidly connecting the first heat exchanger to the PCM accumulator, wherein optionally during expansion a volume of the PCM accumulator is increased,
   - optionally: after the first heat exchanger decompression step, releasing at least a part of the phase change material from the PCM accumulator into the second heat exchanger, including phase change material that has expanded out of the first heat exchanger during the first heat exchanger decompression step.
206. Method according to any of the preceding clauses 201-205, further comprising a second heat exchanger reversal step, wherein it is defined that the heat exchanger that was previously used in cold mode will now be used in warm mode, and the heat exchanger that was previously used in warm mode will now be used in cold mode, wherein after the second heat exchanger reversal step the method is restarted from the first heat exchanger compression step, wherein optionally this is repeated until a predetermined temperature is reached in a space to be cooled or heated, or until a stop signal is received.
207. Method according to any of the preceding clauses 201-206, further comprising
   - after the first heat exchanger compressed step and before the first heat exchanger reversal step, and optionally as part of the first heat exchanger decompression step: a first secondary fluid balancing step, wherein the first secondary fluid and the second secondary fluid are fluidly connected to each other and mixed, and
   - after the second heat exchanger compressed step and - when present - before the second heat exchanger reversal step, and optionally as part of the second heat exchanger decompression step: a second secondary fluid balancing step, wherein the first secondary fluid and the second secondary fluid are fluidly connected to each other and mixed.
208. Method according to the previous clause 207, wherein the mixed first and second secondary fluid are circulated through the secondary sides of the first and second heat exchangers, wherein optionally the first and second heat exchanger are arranged in parallel.
209. Method according to any of the clauses 207-208, wherein the first and/or secondary fluid balancing step is completed
   - after a threshold time, and/or
   - when an outlet temperature of the first heat exchanger becomes smaller or larger than or equal to an inlet temperature of the first heat exchanger, and/or an outlet temperature of the second heat exchanger becomes smaller or larger than or equal to an inlet temperature of the second heat exchanger.
210. Method according to any of the preceding clauses 201-209, wherein during the starting step, the first heat exchanger reversal step, and/or the second heat exchanger reversal step, the secondary side of the heat exchanger that is used in the cold mode is fluidly connected to a heat absorption unit, and the secondary side of the heat exchanger that is used in the warm mode is fluidly connected to a heat removal unit, wherein optionally
   the first secondary fluid is circulated between the secondary side of the first heat exchanger and one of the heat absorption unit or the heat removal unit, and the second secondary fluid is circulated between the secondary side of the second heat exchanger and the other of the heat absorption unit or the heat removal unit.
211. Method according to any of the preceding clauses 201-210, wherein in the first heat exchanger compression step and/or the second heat exchanger compression step, the compressing of the phase change material includes supplying a pressurized fluid to the force unit.
212. Method according to the previous clause 211, wherein the method further comprising controlling the pressure in the first and/or second heat exchanger by controlling the pressure of the pressurized fluid, wherein optionally the pressure of the pressurized fluid is controlled according to a setpoint.
213. Method according to any of the preceding clauses 211-212, wherein
   - the first heat exchanger compressed step includes: stop providing pressurized fluid to the force unit, optionally by stopping a compressor, and/or
   - the second heat exchanger compressed step includes: stop providing pressurized fluid to the force unit, optionally by stopping a compressor.
214. Method according to any of the preceding clauses 211-213, wherein the first and/or second heat exchanger compression step is completed when the pressurized fluid reached a threshold pressure; and/or the first and/or second heat exchanger compression step is completed when the phase change material in the first and/or second heat exchanger reached a PCM pressure.
215. Method according to any of the preceding clauses 201-214, wherein the first heat exchanger compressed step is completed after a threshold time and/or when a difference between an inlet temperature and outlet temperature is below threshold difference, e.g. at least for a predetermined period.
216. System for cooling and/or heating a liquid, configured to perform a method according to any of the preceding clauses 201-215, wherein optionally the system comprises a control unit configured for performing said method.
217. Computer-readable instructions configured to - when executed - cause a control unit or system to perform the method according to any of the preceding clauses 201-215.

## Claims

1. A system for cooling and/or heating at least one medium, comprising:
• a first heat exchanger comprising a first outer end and a second outer end, wherein the second outer end is closed, wherein the first heat exchanger is configured to receive phase change material
• a second heat exchanger comprising a first outer end and a second outer end, wherein the second outer end is closed, wherein the second heat exchanger is configured to receive phase change material,
• a force unit configured to be fluidly connected to the first outer end of the first heat exchanger and to the first outer end of the second heat exchanger, wherein the force unit is configured to compress the phase change material in the first heat exchanger by changing a first heat exchanger volume, and/or to compress the phase change material in the second heat exchanger by changing a second heat exchanger volume
• a control unit configured to control at least the force unit, wherein the control unit is configured to:
• maintain the second heat exchanger volume constant during expansion of phase change material in the first heat exchanger, and
• maintain the first heat exchanger volume constant during the expansion of phase change material in the second heat exchanger.

2. System according to claim 1, wherein the force unit comprises an intensifier piston, wherein the control unit is configured to move the intensifier piston for changing the first and second heat exchanger volume.

3. System according to claim 2, wherein the control unit is configured to maintain the intensifier piston in a fixed position during expansion of the phase change material in the first heat exchanger and during expansion of the phase change material in the second heat exchanger.

4. System according to claim 2 or claim 3, wherein
• the force unit comprises
• a first PCM chamber, wherein the first PCM chamber is configured to be
• fluidly connected to the first heat exchanger and
• part of the first heat exchanger volume, and
• a second PCM chamber, wherein the second PCM chamber is configured to be
• fluidly connected to the second heat exchanger and
• part of the second heat exchanger volume,
• the intensifier piston is configured
• to reduce a volume of the first PCM chamber for compressing the phase change material in the first heat exchanger, and
• to reduce a volume of the second PCM chamber for compressing phase change material in the second heat exchanger.

5. System according to any of the preceding claims, wherein the force unit is configured to be activated by a pressurized fluid which is supplied via at least one supply valve, wherein the control unit is configured to control the at least one supply valve for maintaining the first heat exchanger volume and/or the second heat exchanger volume constant.

6. System according to any of the preceding claims 2-5, wherein the system further comprises an intensifier piston lock configured to lock the intensifier piston in a fixed position, wherein the control unit is configured to control the intensifier piston lock for maintaining the first heat exchanger volume and/or the second heat exchanger volume constant.

7. System according to any of the preceding claims 2-6, further comprising
• a first force unit valve arranged between the force unit and the first heat exchanger, wherein the control unit is configured to control the first force unit valve to fluidly disconnect the first heat exchanger from the force unit for maintaining the first heat exchanger volume constant, and/or
• a second force unit valve arranged between the force unit and the second heat exchanger, wherein the control unit is configured to control the second force unit valve to fluidly disconnect the second heat exchanger from the force unit for maintaining the second heat exchanger volume constant.

8. System according to any of the preceding claims, further comprising a PCM accumulator and a valve system, wherein the control unit is configured control the valve system to fluidly connect the first heat exchanger to the PCM accumulator during expansion of the phase change material in the first heat exchanger and/or to fluidly connect the second heat exchanger to the PCM accumulator during expansion of the phase change material in the second heat exchanger.

9. Method for cooling and/or heating at least one medium, comprising a step of using a system according to any of the preceding claims.

10. Method for cooling and/or heating at least one medium with a system comprising a first heat exchanger, a second heat exchanger, and a force unit configured to be fluidly connected to the first heat exchanger and the second heat exchanger,
wherein the method comprises the following steps:
• compressing the phase change material in the first heat exchanger with the force unit by changing a first heat exchanger volume,
• expanding the phase change material in the first heat exchanger, and during said expansion maintaining a second heat exchanger volume constant,
• compressing the phase change material in the second heat exchanger with the force unit by changing the second heat exchanger volume,
• expanding the phase change material in the second heat exchanger, and during said expansion maintaining the first heat exchanger volume constant.

11. Method according to the preceding claim, wherein the steps of compressing the phase change material include moving an intensifier piston.

12. Method according to the preceding claim, wherein maintaining the first and/or second heat exchanger volume constant includes keeping the intensifier piston in a fixed position.

13. Method according to the preceding claim, wherein the steps of compressing the phase change material include providing a pressurized fluid to the force unit, wherein the pressurized fluid is used for keeping the intensifier piston in the fixed position when maintaining the first and/or second heat exchanger volume constant.

14. Method according to any of the preceding method claims, wherein the system further comprises a PCM accumulator, wherein the method further comprises a step of fluidly connecting the PCM accumulator with the first heat exchanger during expansion of the phase change material in the first heat exchanger, and/or a step of fluidly connecting the PCM accumulator with the second heat exchanger during expansion of the phase change material in the second heat exchanger.

15. Method according to any of the preceding method claims, wherein maintaining the first heat exchanger volume and/or the second heat exchanger volume constant includes maintaining the intensifier piston in a fixed position using an intensifier piston lock.
